(19) Europäisches Patentamt
European Patent Office
Office européen des brevets

(11) Veröffentlichungsnummer: **0 001 614**
**A1**

# (12) EUROPÄISCHE PATENTANMELDUNG

(21) Anmeldenummer: 78101121.8

(22) Anmeldetag: 11.10.78

(51) Int. Cl.[2]: C 09 B 62/00
C 07 D 403/10, D 06 P 3/04
D 06 P 3/66
//C09B47/08

(30) Priorität: 15.10.77 DE 2746441

(43) Veröffentlichungstag der Anmeldung: 02.05.79 Patentblatt 79/9

(84) Benannte Vertragsstaaten: CH DE FR GB

(71) Anmelder: CASSELLA Aktiengesellschaft
Hanauer Landstrasse 526
D-6000 Frankfurt am Main 61(DE)

(72) Erfinder: Müller, Rolf, Dr.
Dornbachweg 3
D-6367 Karben - 4(DE)

(72) Erfinder: Ribka, Joachim, Dr.
Rügener Strasse 4
D-6050 Offenbach-Bürgel(DE)

(74) Vertreter: Urbach, Hans-Georg, Dr. et al.
Hanauer Landstrasse 526
D-6000 Frankfurt am Main 61(DE)

(54) **Wasserlösliche faserreaktive grüne Phthalocyanin-Azofarbstoffe, ihre Herstellung und ihre Verwendung sowie die neuen Phthalocyaninpyrazolon-Zwischenprodukte und deren Herstellung.**

(57) Wasserlösliche faserreaktive grüne Phthalocyanin-Azofarbstoffe der Formel I

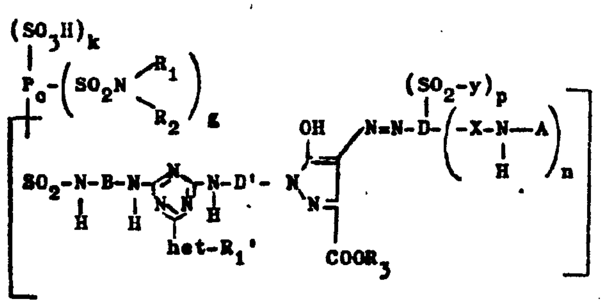

I

worin
Pc der Rest eines Phthalocyanins,
B ein zweiwertiger aliphatischer oder aromatischer Rest,
D und D' zweiwertige aromatische Reste,
A und y faserreaktive Reste,
het und X zweiwertige Brückenglieder,
$R_1$ und $R_1'$ Wasserstoff oder einwertige aliphatische oder aromatische Reste,
$R_2$ und $R_3$ Wasserstoff oder einwertige aliphatische Reste,
k = 1, 2 oder 3; g = 0 oder 1; m = 1, 2 oder 3;
n = 0 oder 1 und p = 0 oder 1 ist,

wobei k+g+m = 3 oder 4 und n+p = 1 ist,
und ihre Alkali,- Ammonium oder Erdalkalisalze,
ihre Herstellung durch Kuppeln eines diazotierten Amins der Formel II

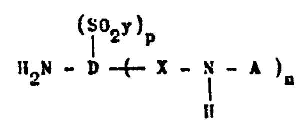

(II)

ein Pyrazolon der allgemeinen Formel III

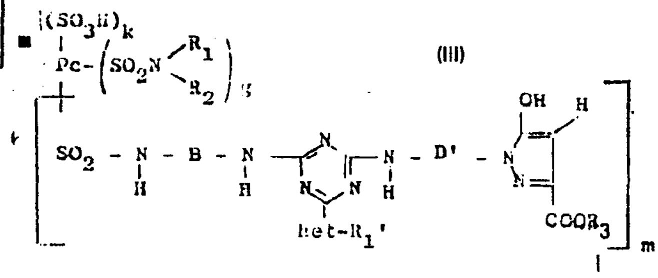

(III)

worin jeweils die variablen Reste und Indices die oben angegebene Bedeutung haben oder, sofern p = 0 ist, durch Acylierung eines Farbstoffs der Formel I a

./.

EP 0 001 614 A1

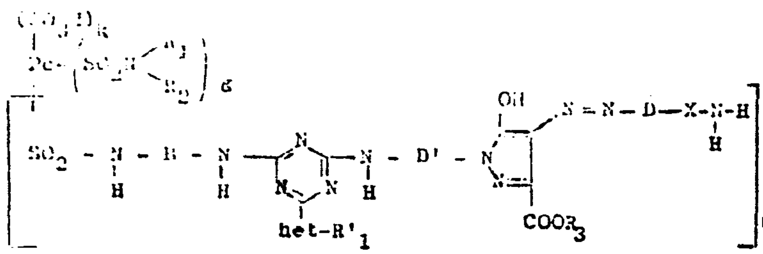

Ia

worin die variablen Reste und Indices die oben angebenen Bedeutungen haben, mit einen Chlorid der Formel IV

$$Cl - A \qquad (IV)$$

in der A die oben angebene Bedeutung hat, ihre Verwendung zum Färben und Bedrucken von Textilien, bestehend aus oder enthaltend Fasern aus Wolle, Polyamid oder Zellulose, sowie Pyrazolone der Formel III und deren Herstellung durch Kuppeln eines diazotierten Amins der Formel V b

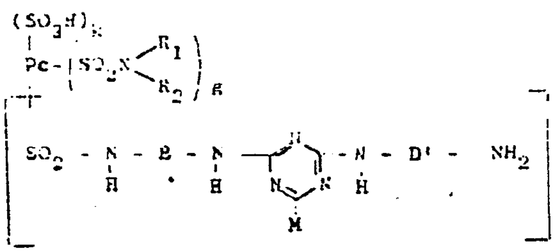

V b

worin die variablen Reste und Indices die oben genannten Bedeutungen haben und M für het $R_1$' oder Cl steht mit einem Bernsteinsäurederivat der Formel VI

$R_3$''-OOC-$CH_2$-CH-$COOR_3$' VI
CO-Z

worin $R_3$' und $R_3$'' die oben für $R_3$ genannte Bedeutung außer der von Wasserstoff haben und Z Wasserstoff, Alkyl, Phenyl oder Alkoxycarbonyl bedeutet, alkalische Cyclisierung der erhaltenen Hydrazons zum Pyrazolon, gegebenenfalls Verseifung der Estergruppe -$COOR_3$' und, sofern M für Cl steht, Umsetzung des Pyrazolons mit einer Verbindung der Formel

H-het-$R_1$'.

Ref. 3104

**Wasserlösliche faserreaktive grüne Phthalocyanin-Azofarbstoffe, ihre Herstellung und ihre Verwendung sowie die neuen Phthalocyaninpyrazolon-Zwischenprodukte und deren Herstellung**

Die vorliegende Erfindung betrifft neue, wertvolle, wasserlösliche faserreaktive grüne Phthalocyanin-Azofarbstoffe der Formel I

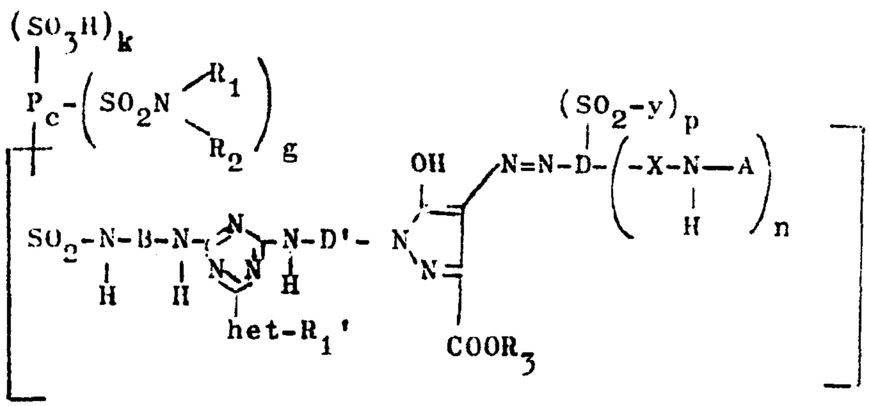

I

ihre Alkali-, Ammonium- oder Erdalkalisalze, ihre Herstellung durch Azokupplung oder Kondensation zweier Teilstücke und ihre Verwendung zum Färben und Bedrucken von Zellulose und Zellulose enthaltenden Textilmaterialien.

In der Formel I bedeuten

Pc den Rest eines metallhaltigen oder metallfreien Phthalocyanins,

D und D' den Phenylen-, Naphthylen-, Diphenyl-, Stilben- oder Phenylcarbamoylphenylrest, wobei D und D' gleich oder verschieden und gegebenenfalls substituiert sein können,

B den Rest eines aliphatischen Kohlenwasserstoffs mit 2-6 C-Atomen, den Phenylen-, Naphthylen-, Benzyl-, Diphenyl- oder

Stilbenrest, die gegebenenfalls substituiert sein können,

A einen faserreaktiven Rest ,

y den Vinylrest oder einen Aethylrest, der ß-ständig eine abspaltbare Gruppe enthält,

$R_1$ und $R_1'$ Wasserstoff, gegebenenfalls substituiertes Alkyl mit 1-6 C-Atomen oder Phenyl, wobei der aromatische Kern gegebenenfalls weitere Substituenten tragen kann und wobei $R_1$ und $R_1'$ gleich oder verschieden sein können und $R_1'$ zusätzlich gegebenenfalls substituiertes Naphthyl,

$R_2$ Wasserstoff, gegebenenfalls substituiertes Alkyl mit 1-6 C-Atomen oder unsubstituiertes Alkyl mit 7-20 C-Atomen,

$R_3$ Wasserstoff oder gegebenenfalls substituiertes Alkyl mit 1-6 C-Atomen,

het O, $\underset{R_1}{\overset{|}{N}}$ oder S

X eine direkte Bindung oder für den Fall, daß D für den Rest des Benzols oder Naphthalins steht, auch Methylen oder Aethylen,

k 1, 2 oder 3

g 0 oder 1

m 1, 2 oder 3

n 0 oder 1

p 0 oder 1

Die Summe von k, g und m ist 3 oder 4 und die Summe von n und p ist 1.

In den erfindungsgemäßen Phthalocyanin-Azofarbstoffen bedeuten insbesondere

Pc den Rest eines metallhaltigen Phthalocyanins,

D und D' den gegebenenfalls durch eine $-SO_3H-$ oder -COOH-Gruppe substituierten Phenylen- oder Naphthylenrest, der pro Kern durch einen Substituenten der Gruppe Alkoxy mit 1-2 C-Atomen oder eine zusätzliche $-SO_3H-$ oder -COOH-Gruppe, durch ein oder zwei gleiche oder verschiedene Halogenatome oder durch ein bis drei gleiche oder verschiedene Alkylreste mit 1-2 C-Atomen substituiert sein kann, den Disulfostilbenrest, den Disulfodiphenylrest oder den Phenylcarbamoylphenylrest,

B den Rest eines gegebenenfalls substituierten aliphatischen Kohlenwasserstoffs mit 2 - 6 C-Atomen, den gegebenenfalls durch eine $-SO_3H$- oder -COOH-Gruppe substituierten Phenyl- oder Naphthylrest, der pro Kern durch einen Substituenten der Gruppe Alkoxy mit 1 - 2 C-Atomen oder eine zusätzliche $-SO_3H$- oder -COOH-Gruppe, durch ein oder zwei gleiche oder verschiedene Halogenatome oder durch ein bis drei gleiche oder verschiedene Alkylreste mit 1 - 2 C-Atomen substituiert sein kann, den Disulfostilbenrest oder den Disulfodiphenylrest

A den Rest einer faserreaktiven Acylierungskomponente

y den Vinylrest, den ß-Sulfatoäthylrest, den ß-Phosphatoäthylrest, den ß-Thiosulfatoäthylrest, den ß-Dimethylaminoäthyl- oder den ß-Diäthylaminoäthylrest,

$R_1$ und $R_1'$ Wasserstoff, Methyl, Carboxymethyl, Sulfomethyl, einen gegebenenfalls durch Cl, Br, OH, Alkoxy mit 1-2 C-Atomen, -COOH oder $-SO_3H$ substituierten Alkylrest mit 2-6 C-Atomen oder Phenyl, wobei der aromatische Kern durch Cl, Alkyl und/oder Alkoxy mit 1-2 C-Atomen, Alkanoylamino mit 1-2 C-Atomen, -COOH, $-CONH_2$, $-SO_2NH_2$ oder $-SO_3H$ substituiert sein kann, $R_1'$ zusätzlich Mono-, Di- oder Trisulfonaphthyl,

$R_2$ Wasserstoff, Methyl, Carboxymethyl, Sulfomethyl, einen gegebenenfalls durch Cl, Br, OH, Alkoxy mit 1-2 C-Atomen, -COOH oder $-SO_3H$ substituierten Alkylrest mit 2-6 C-Atomen oder einen unsubstituierten Alkylrest mit 6-20 C-Atomen,

$R_3$ Wasserstoff, Methyl, gegebenenfalls durch OH, Halogen oder Alkoxy mit 1-2 C-Atomen substituiertes Aethyl, Propyl, n- oder iso-Butyl, Pentyl oder Hexyl.

Bevorzugte Reste des Phthalocyanins sind die Reste des Kobalt- und des Kupferphthalocyanins, insbesondere aber der Rest des Nickelphthalocyanins.

Bei der Betrachtung des Restes D der Diazokomponente sind zwei Fälle zu unterscheiden:

1) Der Fall, daß p für 1 und n für O steht.
2) Der Fall, daß n für 1 und p für O steht.

Bevorzugte Reste D für den Fall, daß p = 1 ist, sind die gegebenenfalls substituierten Reste Phenyl, Naphthyl und

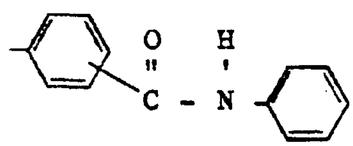

Beispiele für diese Reste sind:

3- oder 4-N-(3'- oder 4'-ß-Sulfato-äthylsulfonyl-phenyl)-carbamoylphenyl, 2-Sulfo-4-ß-Sulfatoäthyl-sulfonylphenyl, 3- oder 4-ß-Sulfatoäthylsulfonyl-phenyl, 2-Sulfo-5-ß-sulfatoäthylsulfonyl-phenyl, 2-Methyl-4-ß-sulfatoäthylsulfonyl-phenyl, 2-Methoxy-4- oder -5-ß-sulfatoäthylsulfonyl-phenyl, 2-Carboxy-5-ß-sulfatoäthylsulfonyl-phenyl, 2,5-Dimethoxy-4-ß-sulfatoäthylsulfonyl-phenyl, 4-Vinylsulfonyl-phenyl, 4-ß-Phosphatoäthylsulfonyl-phenyl, 4-ß-Thiosulfatoäthylsulfonyl-phenyl, 4-ß-Sulfatoäthylsulfonyl-naphthyl-1; 6-ß-Sulfatoäthylsulfonyl-naphthyl-2; 8-Sulfo-6-ß-sulfatoäthylsulfonyl-naphthyl-2.

Besonders bevorzugt sind die durch eine ß-Sulfatoäthylsulfonylgruppe substituierten Phenyl- oder Naphthylreste.

Bevorzugte Reste D für den Fall, daß n = 1 ist, sind die gegebenenfalls substituierten Reste Phenylen oder Naphthylen.

Beispiele für diese Reste sind:
Phenylen (1,4), Phenylen (1,3), 2-Sulfophenylen(1,4), 3-Sulfophenylen(1,4), 4- oder 5-Sulfophenylen(1,3), 2-Carboxyphenylen(1,4), 6-Methoxyphenylen(1,3), 6-Carboxyphenylen(1,3), 6-Carboxy-4-sulfophenylen(1,3), 4,6-Dicarboxyphenylen(1,3), 6-Chlor-4-sulfophenylen(1,3), 2,6-Disulfophenylen(1,4), 2,5-Disulfophenylen(1,4), 4,6-Disulfophenylen(1,3), 5-Sulfo-6-methylphenylen(1,3), 2-Methyl-5-carboxyphenylen(1,4), 3-Äthyl-6-sulfophenylen(1,4), 2,4,6-Trimethyl-5-sulfophenylen(1,3), 4-Sulfonaphthylen(1,5), 4,8-Disulfonaphthylen(2,6), 1-Chlor-5-sulfonaphthylen(2,6), 2-Methyl-7-sulfonaphthylen(1,4).
Dabei steht die Azogruppe jeweils in 1-Stellung des Phenylkerns bzw. in 1- oder 2-Stellung des Naphthalinkerns.

Besonders bevorzugt sind die gegebenenfalls substituierten Reste Phenylen und insbesondere die Reste der Formeln:

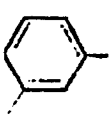 , 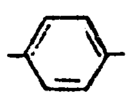 , 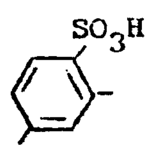 , 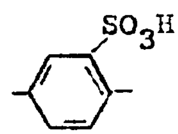

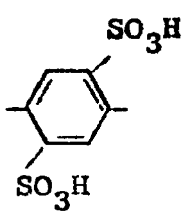 , 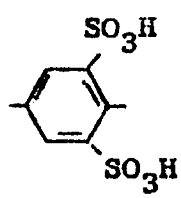 , 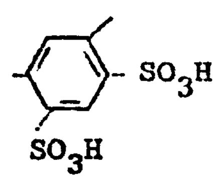

Besonders bevorzugt sind auch solche Farbstoffe der Formel I, die in D außer Carbon- und/oder Sulfonsäureresten keine weiteren Substituenten enthalten.

Bevorzugte Reste D' sind die oben für D bei n = 1 genannten sowie der Disulfostilbenrest.

Für B stehende aliphatische Reste sind insbesondere unsubstituierte Reste mit 2-6 C-Atomen. Beispiele für diese Reste sind:
Äthylen, Tri-, Tetra- und Hexamethylen.
Bevorzugte aromatische Reste, die für B stehen können, sind die oben für D bei n = 1 genannten sowie der Disulfostilbenrest.
Bevorzugte Reste, die für $R_1$, $R_2$ und $R_3$ stehen, sind Wasserstoff, Methyl oder Äthyl. Besonders bevorzugt ist der Wasserstoff. Bevorzugt für $R_1'$ ist Methyl, Äthyl und Phenyl.

Die bevorzugte Herstellung der Farbstoffe der Formel I erfolgt durch Azokupplung. Darüber hinaus können die Farbstoffe auch für den Fall, daß n = 1 ist, durch Acylierung hergestellt werden.

Bei der Herstellung durch Azokupplung werden m-Mole eines Amins der Formel II

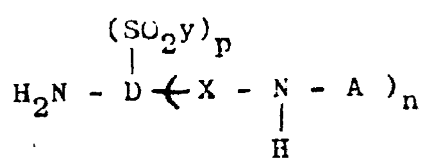

(II)

in der D, A, X, y, p und n die oben angegebene Bedeutung haben, diazotiert und auf ein Pyrazolon der allgemeinen Formel III

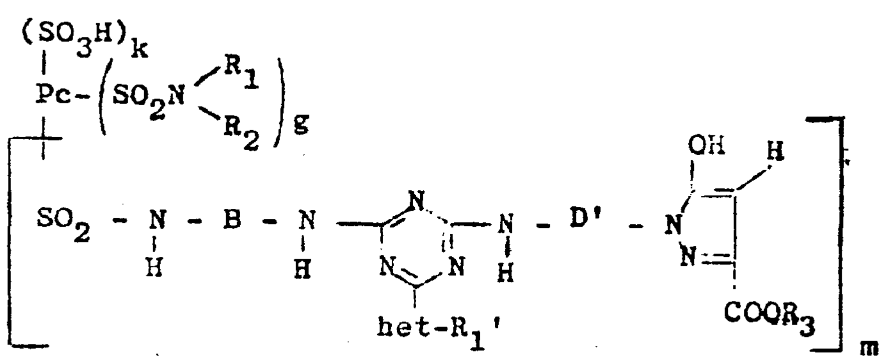

(III)

worin Pc, B, D', $R_1$, $R_1'$, $R_2$, $R_3$, k, g, m und het die oben angegebene Bedeutung haben, gekuppelt.

Bei der Herstellung durch Acylierung wird ein Farbstoff der allgemeinen Formel Ia

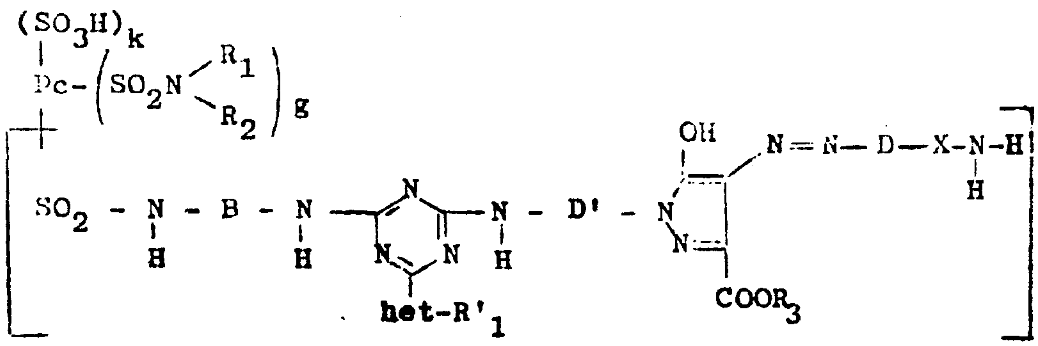

Ia

worin Pc, B, D', $R_1$, $R_1$', $R_2$, $R_3$, het, D, X, k, g und m die oben angegebene Bedeutung haben, mit einem Chlorid der Formel IV

$$Cl - A \qquad (IV)$$

in der A die oben angegebene Bedeutung hat, acyliert.

Für den Fall, daß p = 1 ist, sind zur Herstellung der erfindungsgemäßen Farbstoffe der Formel I durch Azokupplung z.B. folgende Amine der Formel II geeignet:

3-Amino-phenyl-ß-sulfatoäthyl-sulfon; 3-Amino-4-methoxyphenyl-ß-sulfato-äthyl-sulfon; 4-Amino-3-methoxyphenyl-ß-sulfatoäthylsulfon; 3-Amino-4-methylphenyl-ß-sulfatoäthyl-sulfon; 3-Amino-4-sulfophenyl-ß-sulfatoäthyl-sulfon; 4-Aminophenyl-ß-sulfatoäthyl-sulfon; 4-Aminophenyl-ß-phosphatoäthylsulfon; 4-Aminophenyl-ß-thiosulfatoäthyl-sulfon; 4-Aminophenyl-vinyl-sulfon; 3-(4'-Aminobenzoyl)-amino-phenyl-ß-sulfatoäthylsulfon; 4-Aminonaphthyl-(1)-ß-sulfatoäthylsulfon, 6-Aminonaphthyl-(2)-ß-sulfatoäthylsulfon; 6-Amino-4-sulfonaphthyl-(2)-ß-sulfatoäthylsulfon; 8-Amino-6-sulfo-naphthyl-(2)-ß-sulfatoäthyl-sulfon.

Für den Fall, daß n = 1 ist, sind zur Herstellung der erfindungsgemäßen Farbstoffe der Formel I durch Azokupplung z.B. folgende Amine der Formel II geeignet:

| $H_2N-D-X-\underset{H}{N}-$ | A | X' |
|---|---|---|
| 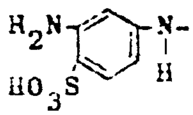 | 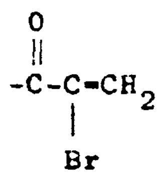 | |
| 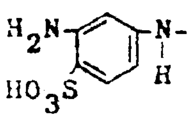 | 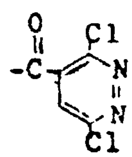 | |
| 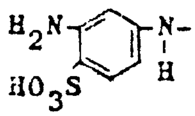 | 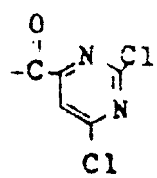 | |
| 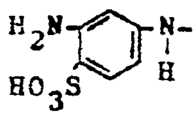 | 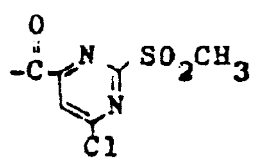 | |
| 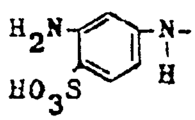 | 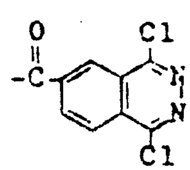 | |
| 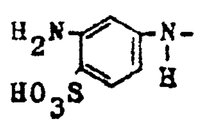 | 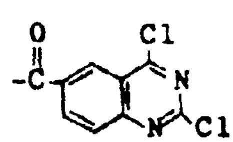 | |

| $H_2N-D-X-\underset{H}{\underset{\vert}{N}}-$ | A | $X'$ |
| --- | --- | --- |
| 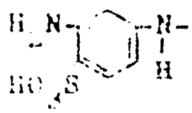 | 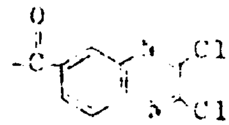 | |
| 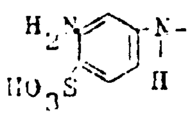 | 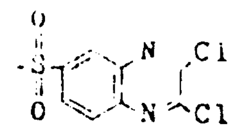 | |
| 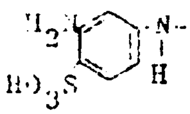 | 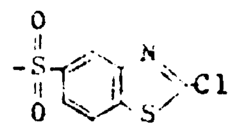 | |
| 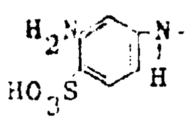 | 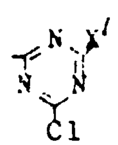 | Cl |
| 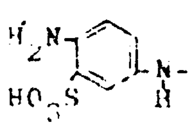 | 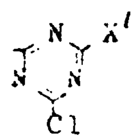 | Cl |
| 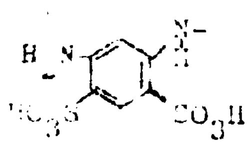 | 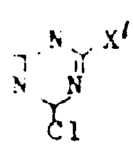 | Cl |
| 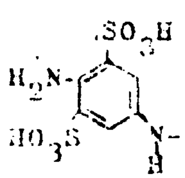 | 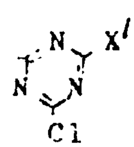 | Cl |

| $H_2N-D-X-\underset{H}{N}-$ | A | $X'$ |
|---|---|---|
| 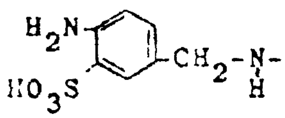 | 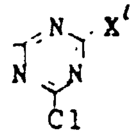 | Cl |
| 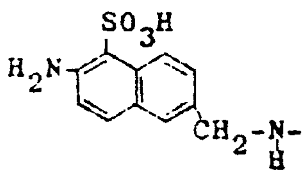 | 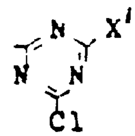 | Cl |
| 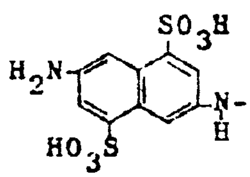 | 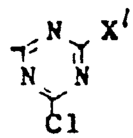 | Cl |
| 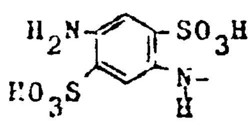 | 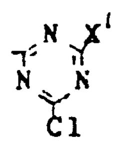 | Cl |
| 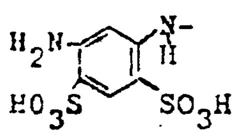 | 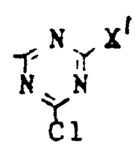 | $-NH_2$ |
| 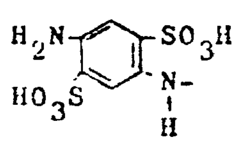 | 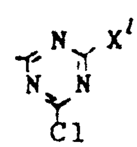 | 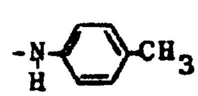 |
| 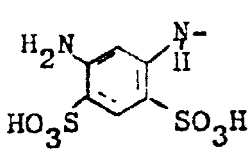 | 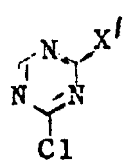 | 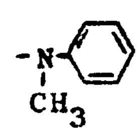 |

| $H_2N-D-X-\underset{H}{N}-$ | A | $X'$ |
| --- | --- | --- |
| 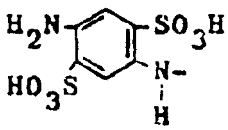 | 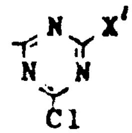 | 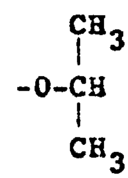 |
| 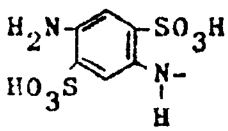 | 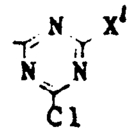 | $-O-CH_2-CH_2-O-CH_3$ |
| 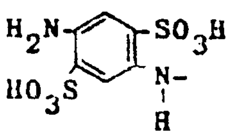 | 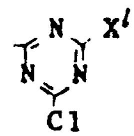 | 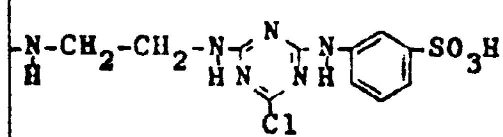 |
| 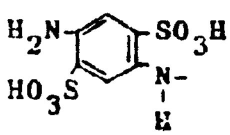 | 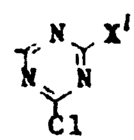 | 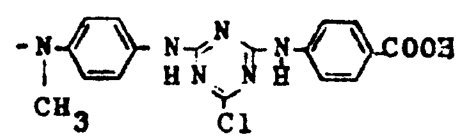 |
| 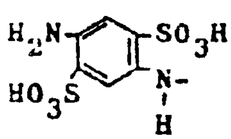 | 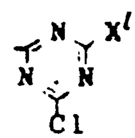 | 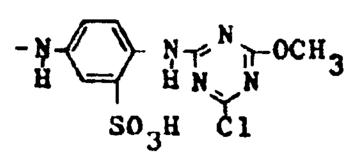 |
| 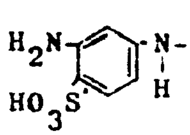 | 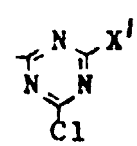 | 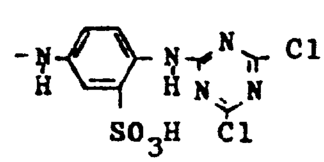 |

| $H_2N-D-X-\underset{H}{N}-$ | A | X' |
| --- | --- | --- |
| 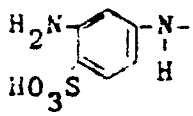 | 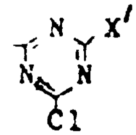 | 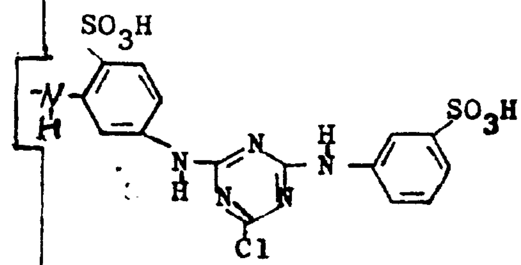 |
| 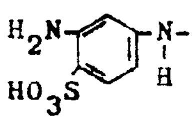 | 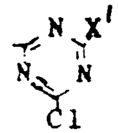 | 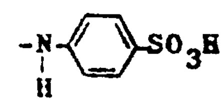 |
| 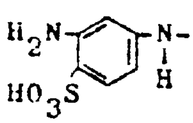 | 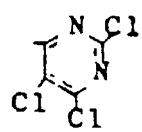 | |
| 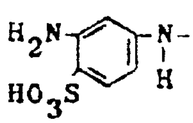 | 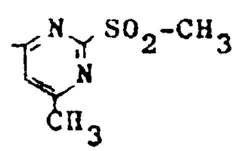 | |
| 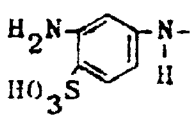 | 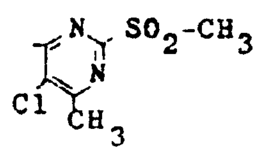 | |
| 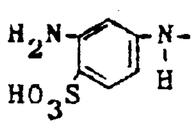 | 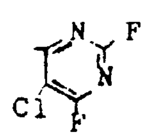 | |

| $H_2N-D-X-\underset{H}{\underset{\vert}{N}}-$ | A | X' |
|---|---|---|
| 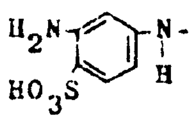 | 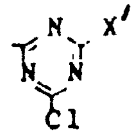 | 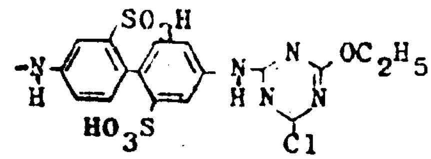 |
| 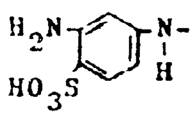 | 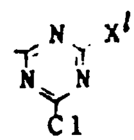 | 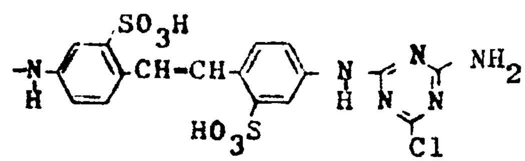 |

Diese Amine der Formel II mit der Bedeutung von n = 1 werden in an sich bekannter Weise hergestellt durch Acylierung von Diaminen der Formel IIa mit Acylierungsmitteln der Formel IV gemäß dem Reaktionsschema

$$\underset{IIa}{H_2N-D-X-\underset{H}{\underset{|}{N}}-H} \quad + \quad \underset{IV}{ClA} \longrightarrow \underset{II}{H_2N-D-X-\underset{H}{\underset{|}{N}}-A} \quad + HCl$$

worin D, X und A die oben genannte Bedeutung haben.

Beispiele für Diamine IIa, die nach der Umsetzung gemäß obigem Schema zu Aminen der Formel II führen, gibt die folgende Liste

p-Phenylendiamin
m-Phenylendiamin
1,4-Phenylendiamin-2-sulfonsäure
1,4-Phenylendiamin-2,5- oder 2,6-disulfonsäure
1,3-Phenylendiamin-4-sulfonsäure
1,3-Phenylendiamin-4,6-disulfonsäure
2,4-Diamino-toluol-5- oder 6-sulfonsäure
2,6-Diamino-toluol-4-sulfonsäure
2,5-Diamino-1,3,5-trimethylbenzol-4-sulfonsäure
2,6-Diamino-1,3-diäthylbenzol-4-sulfonsäure
2,4-Diamino-1-chlorbenzol-6-sulfonsäure
2,4-Diamino-1-methoxybenzol-5-sulfonsäure
1,5-Diaminonaphthalin-2-sulfonsäure
1,4-Diaminonaphthalin-2-sulfonsäure
2,6-Diaminonaphthalin-8-sulfonsäure
2,6-Diaminonaphthalin-4,8-disulfonsäure
1,5-Diaminonaphthalin-3,7-disulfonsäure
1,4-Diaminonaphthalin-2-carbonsäure
1-Amino-4-aminomethyl-benzol
1-Amino-4-aminomethyl-benzol-3-sulfonsäure
2-Amino-5-aminomethyl-naphthalin-1-sulfonsäure
4,4'-Diaminostilben-2,2'-disulfonsäure
4,4'-Diaminodiphenyl-2,2'-disulfonsäure

Acylierungsmittel der Formel IV, die gemäß obigem Schema mit Diaminen der Formel IIa zu den Aminen der Formel II umgesetzt werden können, sind in der Literatur in großer Zahl beschrieben. Ein Überblick ist gegeben in "K. Venkataraman: The Chemistry of Synthetic Dyes", Band VI, S. 4 - 182, Academic Press 1972. Die wichtigsten derartigen Acylierungsmittel gehören zur Klasse der Triazine, Chinoxaline, Phthalazine, Pyridazine, Pyrimidine oder der $\alpha$, ß-ungesättigten aliphatischen Karbonsäuren. Im folgenden seien die wichtigsten Individuen stellvertretend für die gesamte Klasse genannt:

Cyanurchlorid, Cyanurbromid, Cyanurfluorid, Dihalogen-monoamino-triazine, wie 2,6-Dichlor-4-amino-triazin, 2,6-Dichlor-4-methylamino-triazin, 2,6-Dichlor-4-oxäthylaminotriazin, 2,6-Dichlor-4-phenylaminotriazin, 2,6-Dichlor-4-(o-, m- oder p-sulfophenyl)-aminotriazin, 2,6-Dichlor-4-(-2', 4'-, oder -2',5'-disulfophenyl)-aminotriazin sowie die entsprechenden Dibrom- und Difluor-Derivate, ferner Dihalogen-mono-aminotriazine, die über einen Aminoalkylrest mit 2-6 C-Atomen oder über einen Aminophenylrest oder einen Amino-sulfophenylrest einen weiteren mono- oder Dihalogen-Triazinring tragen, wie zum Beispiel 1-Dichlortriazinylamino-2-(Amino-chlortriazinyl-)amino-äthan oder 1-Dichlortriazinylamino-2-sulfo-4-(methoxy-chlortriazinyl-)aminobenzol, Dihalogen-alkoxy- und -aryloxy-sym.-triazine, wie 2,6-Dichlor-4-methoxytriazin, 2,6-Dichlor-4-i-propoxytriazin, 2,6-Dichlor-4-phenoxytriazin, Tetrahalogenpyrimidine, wie Tetrachlor-, Tetrabrom- oder Tetrafluor-pyrimidin, 2,4,6-Trihalogenpyrimidine, wie 2,4,6-Trichlor-, Tribrom- oder -Trifluorpyrimidin, 2,4,6-Trichlor-5-nitro- oder -5-methyl- oder -5-carbomethoxy- oder -5-cyano-pyrimidin, 2,6-Difluor-4-methyl-5-chlor-pyrimidin, 2,4-Difluor-pyrimidin-5-äthylsulfon, 2,6-Difluor-4-chlorpyrimidin, 2,4,6-Trifluor-5-chlorpyrimidin, 4,6-Difluor-2,5-dichlor- oder -dibrompyrimidin, 2-Methylsulfonyl-4-chlor-6-methylpyrimidin, 2,6-Bis-methylsulfonyl-4,5-dichlorpyrimidin, 2-Methylsulfonyl-4,5-dichlor-6-methylpyrimidin, 2-Äthylsulfonyl-4,6-dichlorpyrimidin, Derivate heterocyclischer Carbon- oder Sulfonsäuren wie 3,6-Dichlorpyridazin-4-carbonsäurechlorid, 2,4-Dichlorpyrimidin-5-carbonsäurechlorid, 2,4,6-Trichlorpyrimidin-5-carbonsäurechlorid, 2-Methyl-4-chlorpyrimidin-5-carbonsäurechlorid, 2-Chlor-4-methylpyrimidin-5-carbonsäurechlorid, 2,6-Dichlorpyrimidin-4-carbonsäurechlorid, 2-Methylsulfonyl-6-chlorpyrimidin-4- oder -5-carbonsäurechlorid, 2-Äthylsulfonyl-6-chlorpyrimidin-4- oder -5-carbonsäurechlorid, 2,6-Bis-(methylsulfonyl)-pyrimidin-4-carbonsäurechlorid, 2-Methylsulfonyl-6-methyl-4-chlor- oder

-4-brompyrimidin-5-carbonsäurechlorid oder -bromid, 2,6-Bis-(methylsulfonyl)-4-chlorpyrimidin-5-carbonsäurechlorid, 2- oder 3-Monochlorchinoxalin-6-carbonsäurechlorid oder -6-sulfonsäurechlorid, 2- oder 3-Monobromchinoxalin-6-carbonsäurebromid oder -6-sulfonsäurebromid, 2,3-Dichlorchinoxalin-6-carbonsäurechlorid oder -6-sulfonsäurechlorid, 2,3-Dibromchinoxalin-6-carbonsäurebromid oder -6-sulfonsäurebromid, 1,4-Dichlorphthalazin-6-carbonsäurechlorid oder -6-sulfonsäurechlorid sowie die entsprechenden Bromverbindungen, 2,4-Dichlorchinazolin-6- oder -7-carbonsäurechlorid oder -sulfonsäurechlorid sowie die entsprechenden Bromverbindungen, N-Methyl-N-(2,4-dichlortriazinyl-6)-aminoacetylchlorid, 2-Chlorbenzthiazol-5- oder -6-carbonsäurechlorid oder -5- oder -6-sulfonsäurechlorid und die entsprechenden Bromverbindungen 2-Methylsulfonyl- oder 2-Äthylsulfonyl- oder 2-Phenylsulfonylbenzthiazol-5- oder -6-sulfonsäurechlorid, aliphatische Reaktivkomponenten wie Acrylsäurechlorid, Mono-, Di- oder Trichloracrylsäurechlorid, 3-Chlorpropionsäurechlorid, 3-Phenylsulfonyl-propionsäurechlorid, 3-Methylsulfonyl-propionsäurechlorid, 3-Äthylsulfonyl-propionsäurechlorid, 3-Chloräthansulfochlorid, α-Methylsulfonylacrylsäurechlorid und α-Bromacrylsäurechlorid.

Die Acylierung der Diamine der Formel IIa mit den Verbindungen der Formel IV gemäß obigem Schema erfolgt in an sich bekannter Weise in wäßrigem, wäßrig-organischem oder organischem Lösungsmittel nach Art einer Schotten-Baumann-Reaktion, bei Temperaturen zwischen 0 und 80°C, bevorzugt zwischen 10 und 25°C, wobei man zweckmäßigerweise die frei- ...

werdende Säure durch Zusatz von Alkali wie z.B. Natriumbicarbonat, Soda, Natronlauge oder Natriumacetat neutralisiert bzw. abpuffert. Als organische Lösungsmittel kommen vor allem Aceton, Chlorkohlenwasserstoffe wie Äthylenchlorid oder Chlorbenzol oder auch aprotische polare Lösungsmittel wie Dimethylformamid in Betracht.

Die Diazotierung der Amine der Formel II erfolgt in an sich bekannter Weise in wäßrigem Medium durch Umsetzung mit 1 Mol salpetriger Säure bzw. eines salpetrige Säure abspaltenden Agens in Gegenwart von mindestens 2 Äquivalenten, vorzugsweise ca. 2,5 Äquivalenten einer starken Säure bezogen auf 1 Mol des Amins. Als salpetrige Säure abspaltendes Agens wird in mineralsaurem Medium im allgemeinen ein Salz der salpetrigen Säure, insbesondere ein Alkalisalz wie Natrium- oder Kaliumnitrit eingesetzt.

Die zur erfindungsgemäßen Herstellung der Farbstoffe der Formel I durch Azokupplung benötigten Phthalocyaninpyrazolone der Formel III sind neu. Zu ihrer Herstellung wird ein Amin der allgemeinen Formel V

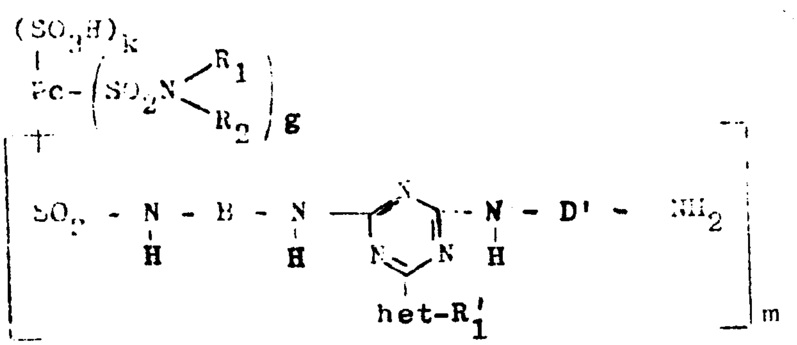

V

wo Pc, B, D', het, $R_1$, $R_1'$, $R_2$, k, g und m die oben genannten Bedeutungen haben, diazotiert und in wäßrigem Medium bei einem pH-Wert zwischen 3 und 8 mit einem Bernsteinsäurederivat der Formel VI

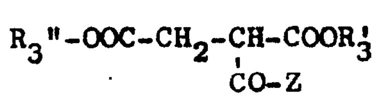

VI

worin $R_3$' und $R_3$'' die oben für $R_3$ genannte Bedeutung außer der von Wasserstoff haben und Z Wasserstoff, Methyl, Äthyl, Phenyl oder Alkoxycarbonyl mit 1-2 C-Atomen bedeutet, gekuppelt. Besonders bevorzugt sind Bernsteinsäurederivate der Formel VI, in denen $R_3$' und $R_3$'' gleich sind und Methyl oder Äthyl bedeuten und Z für eine Methylgruppe steht.
Die Kupplung erfolgt bei einem pH-Wert zwischen 3 und 8, vorzugsweise 4,5 - 5,5.

Das auf diese Weise entstandene Phthalocyaninhydrazon der Formel VII

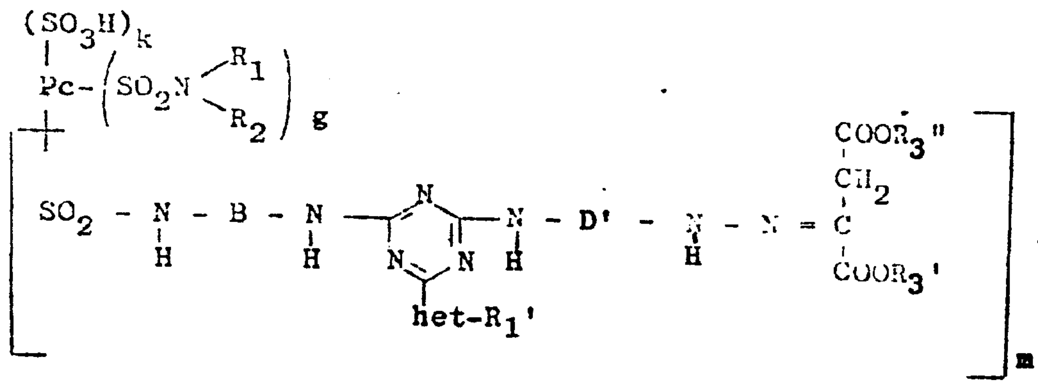

VII

in der Pc, B, D', het, $R_1$, $R_1$', $R_2$, $R_3$', $R_3$'', k, g und m die oben angegebene Bedeutung haben, wird in einem zweiten Reaktionsschritt überaus leicht durch alkalische Behandlung der wäßrigen Lösung der Hydrazone der Formel VII bei Temperaturen zwischen 0 und 100°C, bevorzugt 15 bis 30°C bei einem pH-Wert zwischen 8 und 14 unter Abspaltung des Alkohols der Formel $R_3$''OH cyclisiert. Die Cyclisierung kann mit einer Verseifung der Gruppe $-COOR_3$' des entstandenen Pyrazolons zur freien Carboxylgruppe gekoppelt werden. Hierzu ist es nur erforderlich, in der Nähe der oberen Grenze des angegebenen pH-Wert-Bereichs, beispielsweise bei pH-Werten von 10 bis 14, zu arbeiten. Zweckmäßigerweise wird die Cyclisierung direkt in der bei der Kupplung anfallenden Reaktionslösung der Hydrazone der Formel VII durch Erhöhen ihres pH-Wertes auf 10 bis 14, wobei in der Regel Raumtemperatur genügt, ausgeführt. Die so erhaltene Lösung des Pyrazolons III wird zweckmäßigerweise ohne Isolierung des Pyrazolons zur Azokupplung eingesetzt. Das Pyrazolon kann jedoch gewünschtenfalls auch abgeschieden werden.

Diese Art der Herstellung des Pyrazolons der Formel III ist für den Fall bevorzugt, daß -het-$R_1$' unter den angegebenen Bedeutungen nicht die Bedeutung einer Hydroxylgruppe hat.

In einer weiteren Art der Herstellung wird ein Amin der allgemeinen Formel Va

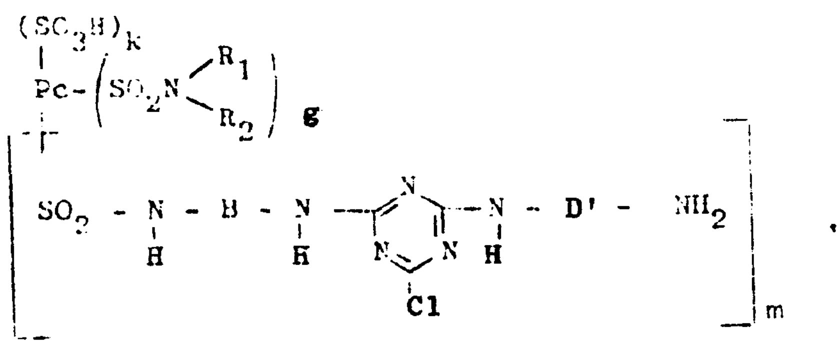

Va

worin Pc, B, D', $R_1$, $R_2$, k, g und m die oben genannten Bedeutungen haben, diazotiert und in wäßrigem Medium bei einem pH-Wert zwischen 3 und 8 mit einem Bernsteinsäurederivat der Formel VI gekuppelt.

Das auf diese Weise entstandene Phthalocyaninhydrazon der Formel VIIa

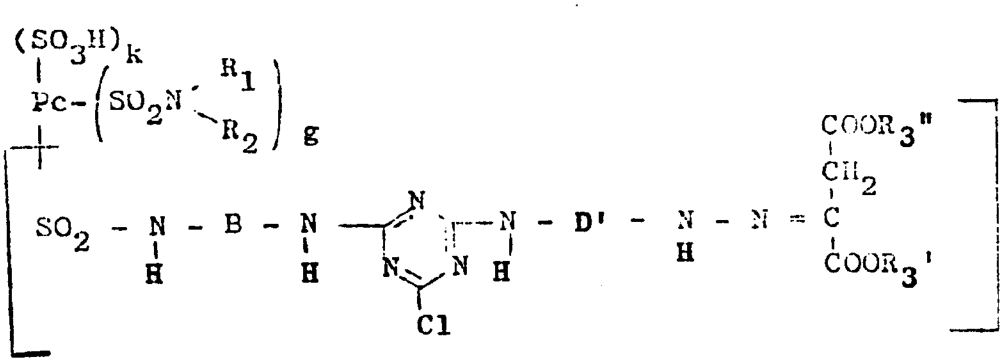

VIIa

in der Pc, B, D', $R_1$, $R_2$, $R_3$', $R_3$'', k, g und m die oben angegebene Bedeutung haben, wird in einem zweiten Reaktionsschritt

durch alkalische Behandlung der wäßrigen Lösung der Hydrazone der Formel VIIa bei Temperaturen zwischen 0 und 50°C, bevorzugt 15 bis 30° bei einem pH-Wert zwischen 8 und 10 unter Abspaltung des Alkohols der Formel $R_3$"OH cyclisiert.

Im Anschluß an die so durchgeführte Cyclisierung kann dann das Chloratom am Triazinring durch eine Verbindung der Formel

H-het-$R_1$'

in der het und $R_1$' die oben angegebene Bedeutung haben, in an sich bekannter Weise, z.B. durch Reaktion bei pH-Werten zwischen 6 und 8 und bei Temperaturen zwischen 60 und 100°C, substituiert werden unter Bildung des Pyrazolons der Formel III. Beispiele für Verbindungen H-het-$R_1$' sind: Anilin; N-Methylanilin; Anilin-2-, 3- oder 4-sulfonsäure; o-, m- oder p-Toluidin; o-, m- p-Anisidin; Methanol; Äthanol; Mercaptoäthanol.

Die Cyclisierung kann mit einer Verseifung der Gruppe -COOR'$_3$ des entstandenen Pyrazolons zur freien Carboxylgruppe und des Chloratoms am Triazinring gekoppelt werden. Hierzu ist es nur erforderlich, bei pH-Werten von 12 bis 14 und bei Temperaturen von etwa 100°C zu arbeiten. Zweckmäßigerweise wird die Cyclisierung direkt in der bei der Kupplung anfallenden Reaktionslösung der Hydrazone der Formel VIIa ausgeführt. Dies ist die bevorzugte Art der Herstellung für den Fall, daß -het-$R_1$' in Formel III für die Hydroxylgruppe steht und $R_3$ die Bedeutung von Wasserstoff hat.

Die zur Herstellung des Phthalocyaninpyrazolons III seinerseits benötigten Amine der Formeln V bzw. Va werden in drei an sich bekannten Reaktionsschritten hergestellt.

Der erste Schritt erfolgt für den Fall, daß 1 für 0 steht, durch Umsetzung von Phthalocyanin-3- oder -4-di-, tri- oder bevorzugt tetrasulfochloriden mit Aminen der allgemeinen Formel VIII .

$$H_2N-B-NH_2 \quad \text{VIII}$$

worin B die oben angegebene Bedeutung hat. Anstelle der Amine der Formel VIII können auch mono-acylierte Amine, z.B. acetylierte Amine der Formel VIIIa

$$H_2N-B-N(H)-C(=O)-CH_3 \quad \text{VIIIa}$$

eingesetzt werden. In diesem Fall wird das entstandene Kondensationsprodukt mit Phthalocyaninsulfochlorid anschließend verseift.

Steht 1 in Formel I bzw. V für die Zahl 1, so wird zur Gewinnung der Amine der Formel V das Phthalocyanin-3- oder -4-sulfochlorid in beliebiger Reihenfolge mit einem Amin der allgemeinen Formel IX

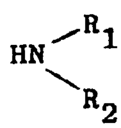

IX

in der $R_1$ und $R_2$ die oben angegebenen Bedeutungen haben, und mit einem Amin der Formel VIII oder mit einer Mischung der beiden Amine umgesetzt.

Das entstandene Kondensationsprodukt entspricht der allgemeinen Formel X

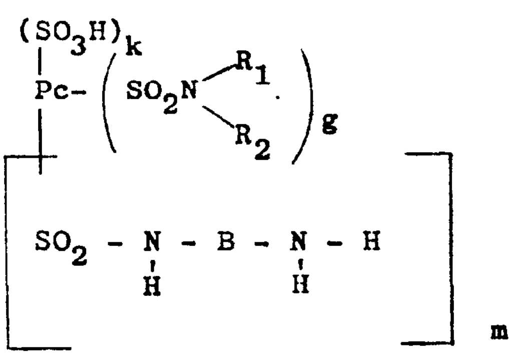

X

Derartige Reaktionen sind z.B. beschrieben in DAS 1 769 398 und DAS 1 289 206.

Es ist möglich, die Amine der Formel X direkt in der wäßrigen Lösung, in der sie anfallen, weiterzuverarbeiten, jedoch ist es in aller Regel vorteilhaft, sie zu isolieren, um sie von einem eventuell noch vorliegenden Anteil an nicht umgesetztem Amin der Formeln VIII und/oder IX zu befreien.

Als Amine der Formel IX, die zur Herstellung der Amine der Formel X verwendet werden können, seien die folgenden genannt:

Ammoniak, Methylamin, Dimethylamin, Äthylamin, Diäthylamin, ß-Hydroxyäthylamin, ß-Methoxyäthylamin, Bis-(ß-hydroxyäthyl-)amin, Aminoessigsäure, Butylamin, Caprylamin, Laurylamin, Anilin, Toluidin, Chloranilin, Anilin o-, m- oder p-sulfonsäure, Anilin o-, m- oder p-carbonsäure, N-Methylanilin, N-Äthylanilin, o-, m- oder p-sulfonsäure, Anilin-ω-methan-sulfonsäure, Benzylamin, Taurin, N-Methyltaurin, ß-Acetylamino-äthylamin.

Als Beispiele für Amine der Formel VIII, die auch in Form der mono-Acylverbindung eingesetzt werden können, seien die folgenden genannt:

Äthylendiamin
p-Phenylendiamin
m-Phenylendiamin
1,4-Phenylendiamin-2-sulfonsäure
1,4-Phenylendiamin-2,5- oder 2,6-disulfonsäure
1,3-Phenylendiamin-4-sulfonsäure
2,4-Diamino-toluol-5- oder 6-sulfonsäure
2,6-Diamino-toluol-4-sulfonsäure
2,5-Diamino-1,3,5-trimethylbenzol-4-sulfonsäure
2,6-Diamino-1,3-diäthylbenzol-4-sulfonsäure
2,4-Diamino-1-chlorbenzol-6-sulfonsäure
2,4-Diamino-1-methoxybenzol-5-sulfonsäure
1,5-Diaminonaphthalin-2-sulfonsäure
1,4-Diaminonaphthalin-2-sulfonsäure

2,6-Diaminonaphthalin-8-sulfonsäure
2,6-Diaminonaphthalin-4,8-disulfonsäure
1,5-Diaminonaphthalin-3,7-disulfonsäure
1,4-Diaminonaphthalin-2-carbonsäure
4,4'-Diaminodiphenyl-2,2'-disulfonsäure
1-Amino-4-aminomethyl-benzol-3-sulfonsäure
4,4'-Diaminostilben-2,2'-disulfonsäure

Der zweite Schritt zur Herstellung der Amine der allgemeinen Formeln V bzw. Va ist die Kondensation des Amins der Formel X mit einem Dichlortriazinderivat der Formel XI

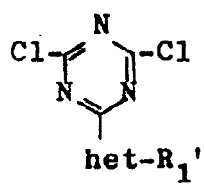

XI

in der het und $R_1'$ die oben angegebenen Bedeutungen haben, zu einem Phthalocyaninderivat der Formel XII

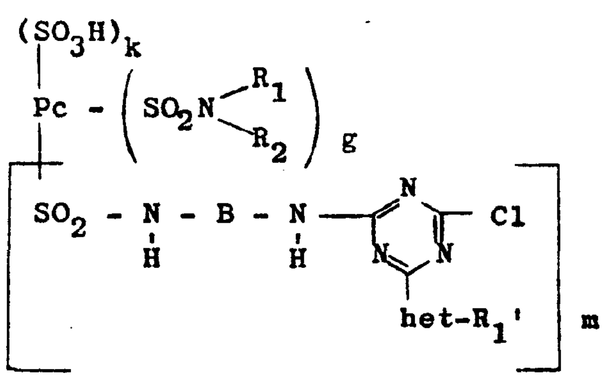

XII

worin Pc, B, het, $R_1$, $R_1'$, $R_2$, k, g und m die oben angegebenen Bedeutungen haben, bzw. mit Trichlortriazin zu dem Phthalocyaninderivat der Formel XIIa

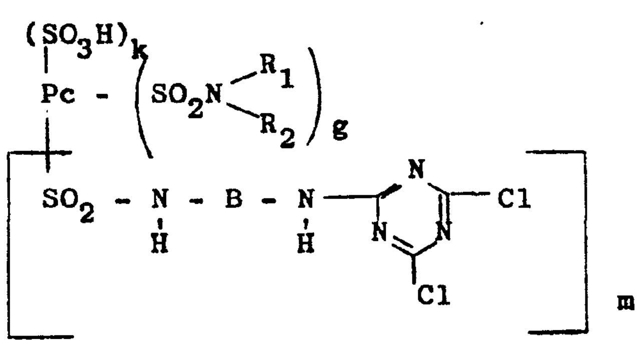

XIIa

worin Pc, B, $R_1$, $R_2$, k, g und m die oben angegebenen Bedeutungen haben.

Derartige Kondensationsreaktionen sind bekannt.

Sie werden in Wasser oder Mischungen aus Wasser und einem organischen Lösungsmittel, z.B. Aceton, durchgeführt bei Temperaturen zwischen 0 und 10°C im Falle des Trichlortriazins bzw. zwischen 30 und 60°C im Falle eines Dichlortriazinderivats der Formel XI und bei pH-Werten zwischen 4 und 8. Die frei werdende Halogenwasserstoffsäure wird durch Zugabe von Alkali, wie z.B. Natriumbicarbonat, Soda oder Natronlauge, neutralisiert. Die so erhaltene Lösung wird zweckmäßigerweise direkt weiterverarbeitet, jedoch können die Produkte der Formeln XII bzw. XIIa gewünschtenfalls auch isoliert werden.

Die Herstellung der Dichlortriazinderivate der allgemeinen Formel XI ist ebenfalls an sich bekannt. Sie erfolgt durch Kondensation von Trichlortriazin mit einer Verbindung der allgemeinen Formel

$$H - het - R_1'$$

unter den oben im Falle des Trichlortriazins genannten Bedingungen.
Als Beispiele für Verbindungen, die der allgemeinen Formel

$$H - het - R_1'$$

entsprechen, seien die folgenden genannt:

Ammoniak
Methylamin
Dimethylamin
Äthylamin
Aminoessigsäure
β-Aminopropionsäure
Äthanolamin
Diäthanolamin
β-Aminoäthansulfonsäure
N-Methyltaurin

Anilin-2-, 3- oder 4-carbonsäure
1-Naphthylamin-4-sulfonsäure
2-Naphthylamin-5 ,6,7- oder 8-sulfonsäure
2-Naphthylamin-1,5; 2,4- oder 6,8-disulfonsäure
2-Naphthylamin-3,6,8- oder 4,6,8-trisulfonsäure
Methanol
Äthanol
Propanol
i-Propanol
Hexanol
Glykol-mono-methyläther
β-Äthoxy-äthanol
Phenol
Phenolsulfonsäure
Salicylsäure
Thiophenol
Butylmercaptan
Anthranilsäureamid
4-Aminobenzolsulfamid

Der dritte Schritt zur Herstellung der Amine der Formeln V bzw. Va ist die Kondensation der Phthalocyaninderivate der Formeln XII bzw. XIIa mit einem Diamin der Formel XIII

$$H_2N - D' - NH_2 \qquad XIII$$

in der D' die oben angegebene Bedeutung hat.

Anstelle des Diamins der Formel XIII kann auch ein nitrogruppenhaltiges Amin der Formel XIIIa

$$H_2N - D' - NO_2 \qquad XIIIa$$

eingesetzt werden, wobei dann im Anschluß an die Kondensation die Nitrogruppe in üblicher Weise, z.B. durch Reduktion mit Natriumsulfhydrat, zur Aminogruppe reduziert wird.

Im Falle der Herstellung eines Amins der Formel V kann auch ein acyliertes, z.B. acetyliertes Diamin der Formel XIII b

$$H_2N - D' - \underset{\substack{| \\ H}}{N} - acyl \qquad XIII\ b$$

zur Kondensation eingesetzt werden, wobei die Acylgruppe im Anschluß an die Kondensation durch alkalisches Verseifen abgespalten wird.

Auch diese Kondensationsreaktion ist an sich bekannt. Sie wird unter den oben genannten Bedingungen, jedoch bei erhöhter Temperatur, etwa bei 20 - 55°C im Falle von XIIa und etwa bei 70 - 100°C im Falle von XII durchgeführt.

Als Beispiele für Amine der Formel XIII, die auch in Form der nitrogruppenhaltigen Verbindungen XIIIa bzw. der acylierten Verbindungen der Formel XIIIb eingesetzt werden können, seien die folgenden genannt:

m- oder p-Phenylendiamin
4,4'-Diaminostilben-2,2'-disulfonsäure
1,4-Phenylendiamin-2-sulfonsäure
1,4-Phenylendiamin-2,5- oder 2,6-disulfonsäure
1,3-Phenylendiamin-4-sulfonsäure
1,3-Phenylendiamin-4,6-disulfonsäure
2,4-Diamino-toluol-5- oder 6-sulfonsäure
2,6-Diamino-toluol-4-sulfonsäure
2,5-Diamino-1,3,5-trimethylbenzol-4-sulfonsäure
2,6-Diamino-1,3-diäthylbenzol-4-sulfonsäure
2,4-Diamino-1-chlorbenzol-6-sulfonsäure
4-Nitro-2-sulfo-anilin
4,4'-Diamino-diphenyl-2,2'-disulfonsäure
1,5-Diaminonaphthalin-2-sulfonsäure
1,4-Diaminonaphthalin-2-sulfonsäure
2,6-Diaminonaphthalin-8-sulfonsäure
2,6-Diaminonaphthalin-4,8-disulfonsäure
1,5-Diaminonaphthalin-3,7-disulfonsäure
1,4-Diaminonaphthalin-2-carbonsäure

Im Falle der Verwendung der Amine der Formeln XIIIa bzw. XIII b können die Reaktionsschritte 2 und 3 zur Herstellung des Amins der Formel V auch in umgekehrter Reihenfolge durchgeführt werden, d.h., es wird zunächst bei 30 - 60°C ein Amin der Formel XIIIa bzw. XIII b mit einem Dichlortriazinderivat der Formel XI und dann das so entstandene Reaktionsprodukt bei etwa 60 - 95°C mit einem Amin der Formel X kondensiert. Das Amin der Formel V erhält man dann im Anschluß daran durch Reduktion bzw. Verseifung.

Wird bei dem erfindungsgemäßen Herstellungsverfahren die Diazoniumverbindung eines Amins der Formel II auf ein Pyrazolon der Formel III gekuppelt, so ist nach Ablauf der Kupplungsreaktion die erfindungsgemäße Herstellung der wasserlöslichen, faserreaktiven Phthalocyanin-azofarbstoffe beendet.

Aus den so erhaltenen wäßrigen Lösungen der Phthalocyaninazofarbstoffe kann der Farbstoff dann durch Aussalzen isoliert werden, oder er kann in Form eines festen Farbstoffpräparats durch Sprühtrocknung der Lösungen erhalten werden.

Wie bereits dargestellt, können die erfindungsgemäßen Farbstoffe außer durch Azokupplung auch für den Fall, daß n = 1 ist, durch Acylierung von Farbstoffen der Formel Ia mit Chloriden der Formel IV hergestellt werden.

Beispiele für Acylierungsmittel der Formel IV sind bereits oben bei der Herstellung der Amine der Formel II gegeben. Entsprechendes gilt für die Bedingungen der Acylierung.

Die Farbstoffe der Formel Ia werden hergestellt durch Kupplung eines Amins der Formel XIVa

$$H_2N - D - NO_2 \qquad XIVa$$

in der D die oben angegebene Bedeutung hat, bzw. eines Amins der Formel XIV b

$$H_2N - D - \underset{H}{\underset{|}{N}} - acyl \qquad XIVb$$

in der D die oben angegebene Bedeutung hat und acyl für eine Acylgruppe, z.B. die Acetylgruppe, steht, auf ein Pyrazolon der Formel III mit anschließender Reduktion des entstandenen Farbstoffs im Falle der Verwendung von Diazokomponenten der Formel XIVa bzw. mit anschließender Verseifung im Falle der Verwendung von Diazokomponenten der Formel XIV b. Die Herstellung der Pyrazolone der Formel III aus den Phthalocyaninaminen der Formel V und Bernsteinsäurederivaten der Formel VI ist oben beschrieben.

Auch aus den durch Acylierungsreaktionen erhaltenen wäßrigen Lösungen kann der Farbstoff durch Aussalzen isoliert oder durch Sprühtrocknung in ein festes Farbstoffpräparat überführt werden.

Die erfindungsgemäßen wasserlöslichen faserreaktiven Farbstoffe sind hervorragend geeignet zum Färben und Bedrucken von Materialien faseriger Struktur, insbesondere von Wolle, Polyamid, Zellulose oder zellulosehaltigen Materialien. Sie zeichnen sich durch eine hohe Fixierausbeute, insbesondere bei Druckverfahren und Fixierung durch Trockenhitze und gute Auswaschbarkeit des nicht fixierten Farbstoffanteils aus und liefern gelb- bis blaustichig grüne Färbungen und Drucke von hoher Brillanz und Farbstärke mit sehr guter Lichtechtheit, guten Naßechtheiten, wie Wäsche 60°C, 95°C und Perboratwäsche, Seewasserechtheit, Schweißechtheit sauer und alkalisch, Chlorbadewasserechtheit, Peroxidechtheit, Rauchgasechtheit.

Auch Gemische erfindungsgemäßer Farbstoffe, insbesondere solche, in denen die Bedeutungen von k und/oder g und/oder m in den Einzelkomponenten verschieden sind, sind zum Färben und Bedrucken von Zellulosematerialien hervorragend geeignet und weisen dieselben vorteilhaften Eigenschaften auf wie die Einzelfarbstoffe.
In den folgenden Beispielen beziehen sich alle Temperaturangaben auf °C.

**Beispiel 1**

188 g m-Phenylendiamin-sulfonsäure werden neutral in etwa 6000 ml Wasser gelöst. Zu dieser Lösung gibt man bei 0-5°C 190 g Cyanurchlorid, gelöst in Aceton, und hält gleichzeitig mit etwa 100 ml 10n Natronlauge den pH zwischen 6 und 7. Wenn keine m-Phenylendiaminsulfonsäure mehr nachweisbar ist, wird die neutrale Lösung mit 70 g Natriumnitrit versetzt und dann bei 0-3°C in 250 ml 10n Salzsäure eingerührt. Ist die Diazotierung beendet, gibt man die Diazosuspension zu einer neutralen Lösung von 1466 g 3-[4-Sulfo-3 {4-methoxy-6-[4-sulfo-3-(3-carboxy-5-hydroxy-1-pyrazolyl)-Phenylamino]-s-triazinyl-(2)-amino} -phenyl]-aminosulfonyl-nickelphthalocyanin-3', 3'', 3'''-trisulfonsäure in etwa 9000 ml Wasser, der zuvor 100 g $NaHCO_3$ zugesetzt worden waren. Die Kupplung ist in wenigen Minuten beendet.
Der entstandene grüne Phthalocyanin-azo-farbstoff kann durch Aussalzen oder Sprühtrocknen isoliert werden.

Die zur Kupplung benötigte Lösung des Phthalocyaninpyrazolons kann auf folgende Weise erhalten werden:

1060 g 3-[(3-Amino-4-sulfo-phenyl)-amino-sulfonyl-]nickel-phthalocyanin-3', 3", 3'''-trisulfonsäure, hergestellt in üblicher Weise durch Kondensation von Nickelphthalocyanintetrasulfochlorid mit 1,3-Diaminobenzol-4-sulfonsäure, werden mit 7000 ml Wasser verrührt und durch Zugabe von 400 ml 10n Natronlauge gelöst.

Zu dieser Lösung gibt man bei 35-45°C 190 g Methoxydichlortriazin, gelöst in Aceton, und hält gleichzeitig mit etwa 100 ml 10n Natronlauge den pH-Wert zwischen 6 und 7. Wenn keine freien Aminogruppen mehr nachweisbar sind, wird die neutrale Lösung mit einer neutralen Lösung von 195 g m-Phenylendiaminsulfonsäure in etwa 3000 ml Wasser versetzt und auf etwa 85°C erwärmt. Gleichzeitig hält man mit weiteren 100 ml 10n Natronlauge den pH-Wert zwischen 6 und 7. Wenn der pH-Wert konstant bleibt, ist die Reaktion beendet und nicht umgesetzte Metaminsäure läßt sich in einem Chromatogramm nur noch spurenweise nachweisen. Das entstandene Amin entspricht der allgemeinen Formel V. Es wird durch Zugabe von Steinsalz abgeschieden und durch Waschen mit 20%igem Salzwasser von

eventuell nicht umgesetzter Metaminsäure befreit.
Es wird dann erneut mit etwa 8000 ml Wasser neutral gelöst, mit 72 g Natriumnitrit versetzt und in eine Mischung aus 300 ml 10n Salzsäure und 2000 g Eis bei 0-5° eingerührt.
Nach kurzer Zeit wird ein eventueller Überschuß von Nitrit durch Zugabe von Aminosulfosäure zerstört. In die so erhaltene Diazosuspension werden 210 g Acetylbernsteinsäuredimethylester eingegossen. Anschließend wird der pH-Wert zunächst durch Einstreuen von ca. 130 g Soda auf 5,5 und dann mit ca. 84 g Natriumbicarbonat bei 5 bis 6 gehalten. Man rührt anschließend ca. 1 Stunde nach. Das Ende der Reaktion erkennt man daran, daß der pH konstant bleibt und daß beim Versetzen einer Probe mit einer Lösung von H-Säure in 2n Soda keine Farbtonveränderung eintritt.

Die so erhaltene Lösung des Oxalessigsäuredimethylester-{2-sulfo-5/4-methoxy-6-(2-sulfo-5-trisulfo-Ni-Pc-sulfonamido-phenyl)-s-triazinyl-(2)7-phenyl} -hydrazons wird mit 350 ml 10n Lauge versetzt, wodurch der pH auf Werte von 12 bis 13 ansteigt. Man rührt einige Stunden, am besten über Nacht, bei Raumtemperatur. Der Ringschluß zum entsprechenden 3-Carboxy-pyrazolon-5 ist dann abgeschlossen. Der pH-Wert wird mit etwas Salzsäure auf 8 zurückgestellt und die erhaltene Rohlösung direkt zur Kupplung eingesetzt.

Ersetzt man bei der Herstellung der Diazokomponente die 1,3-Diaminobenzolsulfonsäure durch eine der im folgenden genannten Verbindungen und verfährt im übrigen wie oben beschrieben, so erhält man ebenfalls wertvolle grüne Reaktivfarbstoffe:

1,4-Diaminobenzolsulfonsäure

1,4-Diaminobenzol 2,5- oder 2,6-disulfonsäure

1,3-Diaminobenzol-2,6-disulfonsäure

4,4'-Diaminostilben-2,2'-disulfonsäure

Ersetzt man bei der Herstellung der Diazokomponente das Cyanurchlorid durch eine molare Menge eines der folgenden Acylierungsmittel, und verfährt im übrigen wie oben beschrieben, so erhält man ebenfalls wertvolle grüne Reaktivfarbstoffe:

β-Chlorpropionsäurechlorid

α,β-Dibrompropionsäurechlorid

Kondensationsprodukt aus 1 Mol Cyanurchlorid und 1 Mol 2-(3-Amino-4-sulfophenylamino)-4-(4-sulfophenylamino)-6-chlortriazin-1,3,5

Acrylsäurechlorid

α-Bromacrylsäurechlorid

3-β-Chloräthylsulfonylbenzoesäurechlorid

Kondensationsprodukt aus 1 Mol Cyanurchlorid und 1 Mol 2-(4-Amino-3-sulfophenylamino)-4-(4-sulfophenylamino)-6-chlortriazin-1,3,5

ω-(β-Chloräthylsulfonyl)-buttersäurechlorid

2,4-Dichlor-pyrimidin-5-carbonsäurechlorid

2,4-Dibrom-pyrimidin-5-carbonsäurebromid

2,4-Difluor-pyrimidin-5-carbonsäurechlorid

2,6-Dichlor-pyrimidin-4-carbonsäurechlorid

2,3-Dichlorchinoxalin-6-carbonsäurechlorid

2,3-Dichlorchinoxalin-6-sulfonsäurechlorid

1,4-Dichlor-phthalazin-6-sulfonsäurechlorid

1,4-Dichlor-phthalazin-6-carbonsäurechlorid

2-Methylsulfonyl-6-chlor-pyrimidin-4-carbonsäurechlorid

3,6-Dichlorpyridazin-4-carbonsäurechlorid

2,4,6-Tribrom-1,3,5-triazin

2,4,6-Trifluor-1,3,5-triazin

2,4,6-Trisulfo-1,3,5-triazin

2,4-Disulfo-6-chlor-1,3,5-triazin

2-Amino-4,6-dichlor-1,3,5-triazin

2-Methylamino-4,6-dichlor-1,3,5-triazin

2-Phenylamino-4,6-dichlor-1,3,5-triazin

2-2'-Methyl-phenylamino-4,6-dichlor-1,3,5-triazin

2-2'-Methyl-4'-sulfophenylamino-4,6-dichlor-1,3,5-triazin

2-2'-Carboxy-4'-sulfophenylamino-4,6-dichlor-1,3,5-triazin

2-2'-Sulfophenylamino-4,6-dichlor-1,3,5-triazin

2-3'-Sulfophenylamino-4,6-dichlor-1,3,5-triazin

2-4'Sulfophenylamino-4,6-dichlor-1,3,5-triazin

2-Methoxy-4,6-dichlor-1,3,5-triazin

2-Äthoxy-4,6-dichlor-1,3,5-triazin

2-i-Propoxy-4,6-dichlor-1,3,5-triazin

2-Phenoxy-4,6-dichlor-1,3,5-triazin

2-N-Methyl-N-phenylamino-4,6-dichlor-1,3,5-triazin

2-Butylmercapto-4,6-dichlor-1,3,5-triazin

2-β-Methoxyäthoxy-4,6-dichlor-1,3,5-triazin

2-(2'-Carboxyphenoxy)-4,6-dichlor-1,3,5-triazin

2-Carboxymethylthio-4,6-dichlor-1,3,5-triazin

2-Phenylthio-4,6-dichlor-1,3,5-triazin

Kondensationsprodukt aus 1 Mol Cyanurchlorid und 1 Mol 2-β-Amino-äthylamino-4-(2',5'-disulfophenylamino)-6-chlortriazin-1-3-5

Kondensationsprodukt aus 1 Mol Cyanurchlorid und 1 Mol 2-4'-Amino-3'-sulfo-phenylamino-4-(2"-carboxyphenylamino)-6-chlortriazin-1-3-5

Kondensationsprodukt aus 1 Mol Cyanurchlorid und 1 Mol 2-3'-Amino-4'-sulfo-phenylamino-4-n-butoxy-6-chlortriazin-1-3-5

Tetrachlorpyrimidin

2,4,6-Trichlorpyrimidin

5-Cyan-2,4,6-trichlorpyrimidin

5-Nitro-2,4,6,-trichlorpyrimidin

2,4-Difluor-6-chlorpyrimidin

2-Methylsulfonyl-4-methyl-6-chlorpyrimidin

2-Methylsulfonyl-4,6-dichlorpyrimidin

2,3-Dichlorchinoxalin-5-carbonsäurechlorid

2,3-Dichlorchinoxalin-5-sulfonsäurechlorid

2,4-Dichlorchinazolin-6-carbonsäurechlorid

2,4-Dichlorchinazolin-6-sulfonsäurechlorid

2,4-Dichlorchinazolin-7-sulfonsäurechlorid

2,4-Difluorpyrimidin-6-carbonsäurechlorid

2-Methylsulfonyl-6-chlor-pyrimidin-5-carbonsäurechlorid

2,6-Bis-(methylsulfonyl)-pyrimidin-5-carbonsäurechlorid

Verwendet man zur Herstellung der Kupplungskomponente anstelle des oben genannten Kondensationsproduktes aus Nickelphthalo-

cyaninsulfochlorid und 1,3-Diaminobenzolsulfonsäure das Kondensationsprodukt aus Nickelphthalocyaninsulfochlorid und einem der im folgenden genannten Amine, und verfährt im übrigen wie beschrieben, so erhält man ebenfalls wertvolle grüne Reaktivfarbstoffe:

1,4-Phenylendiamin-2-sulfonsäure
1,4-Phenylendiamin-2,5-disulfonsäure
1,4-Phenylendiamin-2,6-disulfonsäure
2,4-Diaminotoluol-6-sulfonsäure
2,6-Diaminotoluol-4-sulfonsäure
2,4-Diamino-1,3,5-trimethylbenzol-6-sulfonsäure
2,6-Diaminonaphthalin-4,8-disulfonsäure
1,5-Diaminonaphthalin-2-sulfonsäure
2,6-Diaminonaphthalin-8-sulfonsäure
1-Amino-4-aminomethyl-benzol-3-sulfonsäure
2-Amino-5-aminomethyl-naphthalin-1-sulfonsäure
1,4-Phenylendiamin(Acetylderivat, anschließend verseift)
1,3-Diaminopropan
1,3-Phenylendiamin(Acetylderivat, anschließend verseift)
1,2-Diaminoäthan
1,2-Diamino-2,2-dimethyl-äthan
1,6-Diaminohexan
1,2-Diaminoäthan(Acetylderivat, anschließend verseift)
4,4'-Diaminostilbendisulfonsäure-2,2'

Ersetzt man die 1,3-Diaminobenzolsulfonsäure bei der Kondensationsreaktion mit der 3-(3-Chlor-methoxy-triazinylamino-4-sulfo-phenyl)-amino-sulfonyl-Ni-Pc-3', 3", 3'''-trisulfonsäure durch eines der im folgenden genannten Amine, so erhält man ebenfalls wertvolle Phthalocyaninpyrazolone:

1,4-Phenylendiamin-2-sulfonsäure
1,3-Phenylendiamin-4,6-disulfonsäure
1,4-Phenylendiamin-2,5-disulfonsäure
1,4-Phenylendiamin-2,6-disulfonsäure
2,4-Diaminotoluol-6-sulfonsäure
2,6-Diaminotoluol-4-sulfonsäure

2,4-Diamino-1,3,5-trimethylbenzol-6-sulfonsäure
2,6-Diaminonaphthalin-4,8-disulfonsäure
1,5-Diaminonaphthalin-2-sulfonsäure
2,6-Diaminonaphthalin-8-sulfonsäure
4,4'-Diaminostilbendisulfonsäure-2,2'

Ersetzt man bei der Herstellung der Kupplungskomponente das Methoxydichlortriazin durch molare Mengen der im folgenden genannten Dichlortriazinderivate, und verfährt im übrigen wie oben beschrieben, so erhält man ebenfalls wertvolle grüne Reaktivfarbstoffe

Aethoxydichlortriazin
i-Propoxydichlortriazin
ß-Methoxy-äthoxydichlortriazin
Phenoxydichlortriazin
Methylmercaptodichlortriazin
Phenylmercaptodichlortriazin

Beispiel 2

Verwendet man anstelle des in Beispiel 1 angegebenen Amins 3-[(3-Amino-4-sulfo-phenyl)-amino-sulfonyl-]nickelphthalocyanin-3', 3'', 3'''-trisulfonsäure die molar entsprechende Menge eines der in der folgenden Tabelle genannten Amine und verfährt im übrigen wie dort angegeben, so erhält man ebenfalls wertvolle, als Kupplungskomponenten geeignete, entsprechend substituierte Pyrazolone.

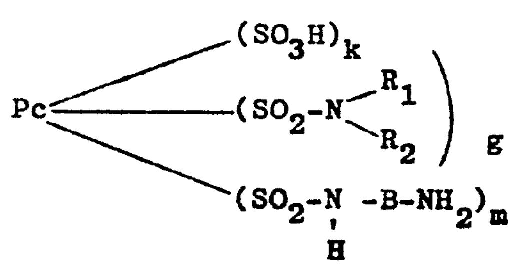

| $R_1$ | $R_2$ | B | k | g | m |
|---|---|---|---|---|---|
| -H | -H | 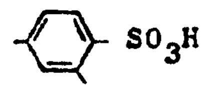 | 2 | 1 | 1 |
| -H | $-CH_2-COOH$ | 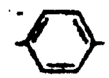 | 2 | 1 | 1 |
| -H | $-C_2H_4-SO_3H$ | 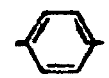 | 1 | 1 | 2 |
| -H | -H | 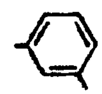 | 2 | 1 | 1 |
| -H | $-C_2H_4OH$ | 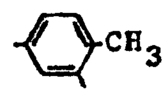 | 2 | 1 | 1 |
| -H | $-C_2H_4-O-C_2H_5$ | 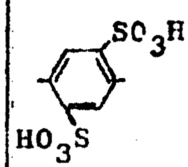 | 2 | 1 | 1 |
| -H | -H | 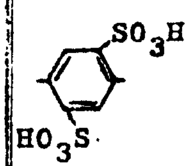 | 2 | 1 | 1 |

| $R_1$ | $R_2$ | B | k | g | m |
|---|---|---|---|---|---|
| -H | $-CH_3$ | 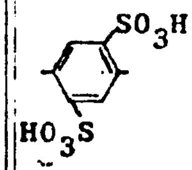 | 2 | 1 | 1 |
| -H | -H | 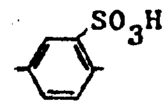 | 2 | 1 | 1 |
| -H | $-C_3H_6-COOH$ | 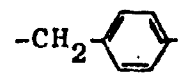 | 2 | 1 | 1 |
| -H | $-C_6H_{13}$ | 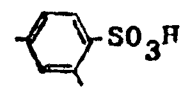 | 2 | 1 | 1 |
| -H | $-C_9H_{19}$ | 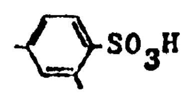 | 2 | 1 | 1 |
| -H | $-C_{15}H_{31}$ | 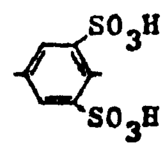 | 2 | 1 | 1 |
| -H | $-C_{20}H_{41}$ | 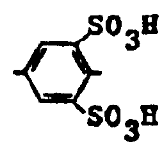 | 2 | 1 | 1 |

| $R_1$ | $R_2$ | B | k | g | m |
|---|---|---|---|---|---|
| $-H$ | $-C_4H_9$ | 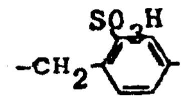 | 2 | 1 | 1 |
| $-H$ | $-C_3H_7$ | 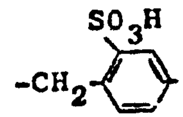 | 2 | 1 | 1 |
| $-H$ | $-C_2H_5$ | 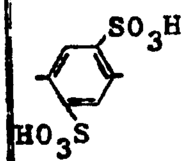 | 2 | 1 | 1 |
| $-CH_3$ | $-C_2H_5$ | 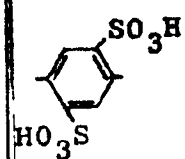 | 2 | 1 | 1 |
| $-C_2H_5$ | $-C_2H_5$ | 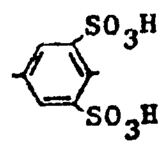 | 2 | 1 | 1 |
| $-C_3H_7$ | $-C_2H_5$ | 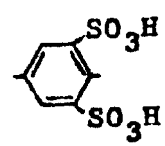 | 2 | 1 | 1 |

| $R_1$ | $R_2$ | B | k | g | m |
|---|---|---|---|---|---|
| $-C_2H_4Br$ | $-C_2H_5$ | 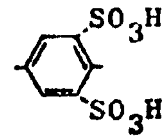 | 2 | 1 | 1 |
| $-C_2H_4-O-CH_3$ | $-C_2H_5$ | 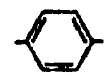 | 2 | 1 | 1 |
| $-C_2H_4-SO_3H$ | $-C_2H_5$ | 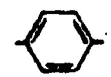 | 2 | 1 | 1 |
| $-C_4-H_8-COOH$ | $-C_2H_5$ | 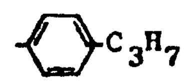 | 2 | 1 | 1 |
| $-C_2H_4OH$ | $-C_2H_5$ | 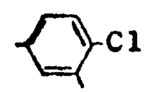 | 2 | 1 | 1 |
| $-C_2H_4OH$ | $-C_2H_4OH$ | 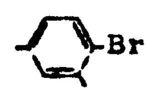 | 2 | 1 | 1 |
| $-C_2H_4OH$ | $-C_2H_4OH$ | 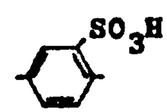 | 1 | 1 | 1 |

| $R_1$ | $R_2$ | B | k | g | m |
|---|---|---|---|---|---|
| $-C_2H_4OH$ | $-C_2H_4OH$ | 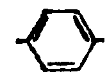 | 1 | 1 | 2 |
| -H | $-C_2H_4-SO_3H$ | 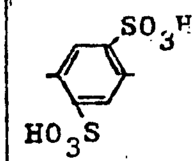 | 1 | 2 | 1 |
| -H | $-C_2H_4-SO_3H$ | 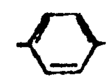 | 1 | 1 | 1 |
| -H | $-C_2H_4OH$ | 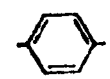 | 1 | 2 | 1 |
| | | 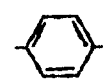 | 0 | 0 | 3 |
| | | 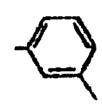 | 1 | 0 | 2 |

| $R_1$ | $R_2$ | B | k | g | m |
|---|---|---|---|---|---|
| $-H$ | $-CH_2-COOH$ | 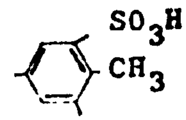 | 1 | 1 | 2 |
| | | 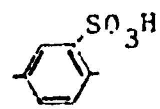 | 1 | 0 | 3 |
| $-H$ | $-H$ | 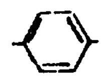 | 1 | 1 | 2 |
| $-CH_3$ | $-CH_3$ | 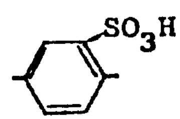 | 1 | 1 | 2 |
| $-H$ | $-H$ | 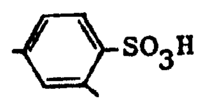 | 1 | 1 | 2 |
| $-H$ | $-H$ | 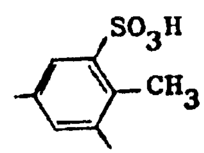 | 1 | 1 | 2 |
| $-H$ | $-H$ | $-C_2H_4-$ | 1 | 1 | 2 |

**Beispiel 3**

Ersetzt man den in Beispiel 1 für die Herstellung der Kupplungskomponente 3-[4-Sulfo-3{4-methoxy-6-[4-sulfo-3-(3-carboxy-5-hydroxy-1-pyrazolyl)-phenylamino]-s-triazinylamino}-phenyl]-aminosulfonyl-nickelphthanocyanin-3', 3", 3"'-trisulfonsäure eingesetzten Acetylbernsteinsäuredimethyl-ester durch eines der folgenden Derivate der Bernsteinsäure, so erhält man ebenfalls Arylpyrazolone, die erfindungsgemäß zu wertvollen Azophthalocyaninfarbstoffen verarbeitet werden können

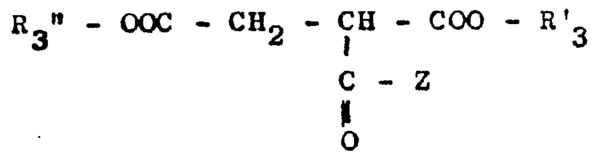

| $R_3'$ | $R_3''$ | Z |
|---|---|---|
| $-C_2H_5$ | $-C_2H_5$ | $-CH_3$ |
| $-CH_3$ | $-CH_3$ | -H |
| $-CH_3$ | $-C_2H_4Cl$ | $-CH_3$ |
| $-CH_3$ | $-i-C_3H_7$ | $-CH_3$ |
| $-CH_3$ | $-i-C_4H_9$ | $-COO-CH_3$ |
| $-CH_3$ | $-i-C_6H_{11}$ | $-COO-C_2H_5$ |
| $-CH_3$ | $-C_2H_4-OH$ | $-CH_3$ |
| $-CH_3$ | $-C_3H_6-OCH_3$ | $-COO-C_3H_7$ |
| $-CH_3$ | $-C_2H_5$ | $-COO-C_3H_7$ |
| $-C_3H_7$ | $-C_2H_5$ | $-C_2H_5$ |
| $-C_5H_{11}$ | $-C_2H_5$ | $-CH_3$ |
| $-C_2H_5$ | $-C_2H_5$ | $-CH_3$ |
| $-C_2H_5$ | $-C_2H_5$ | $-C_6H_5$ |
| $-C_2H_4-O-C_2H_5$ | $-C_2H_5$ | $-CH_3$ |

Beispiel 4

Versetzt man den nach Beispiel 1 hergestellten Farbstoff mit einer mindestens molaren Menge einer der im folgenden genannten, eine acylierbare Aminogruppe enthaltenden Verbindungen und erwärmt dann je eine Stunde auf 30°, 40° und 50°, wobei man den pH durch Zugabe von Alkali wie Natriumbicarbonat, Soda oder Natronlauge zwischen 4 und 7 hält, so erhält man ebenfalls wertvolle grüne Reaktivfarbstoffe. Dabei kann im Falle von Ammoniak oder aliphatischen Aminen das Alkali durch ein zweites Mol des Amins ersetzt werden.

Ammoniak
Methylamin
Diäthylamin
iso-Propylamin
Äthanolamin
Diäthanolamin
4-Aminophenyl-β-sulfatoäthylsulfon
Anilin
o-, m-, p-Toluidin
N-Methylanilin
Anilin 2-, 3-, 4-sulfonsäure
2-, 3-, 4-Aminobenzosäure
Anilin-ω-methansulfosäure
β-Aminoäthansulfosäure
N-Methyltaurin
Bis-β-(ß-chloräthylsulfonyl-)äthylamin
2-Aminotoluol-5-sulfonsäure
Aminoessigsäure
β-(β-chloräthylsulfonyl-)äthylamin
Anilin 2-,4- oder 2-,5-disulfosäure
1-Naphthylamin-4-sulfonsäure
2-Naphthylamin-1 ,5- oder 4 ,8-disulfonsäure
2-Naphthylamin-3 ,6 ,8- oder-4 ,6 ,8-trisulfonsäure
Kondensationsprodukt aus je 1 Mol:
p-Phenylendiamin, Cyanurchlorid und Anilin-3-sulfonsäure;
Äthylendiamin, Cyanurchlorid und Anilin-2 ,4-disulfonsäure;

1,4-Phenylendiamin-2,5-disulfonsäure und iso-propoxydichlortriazin;

1,3-Phenylendiamin-4-sulfonsäure, Cyanurchlorid und Anilin-4-sulfonsäure;

1,3-Phenylendiamin-4-sulfonsäure und β-Äthoxyäthoxydichlortriazin;

p-Phenylendiaminsulfonsäure und Methoxydichlortriazin;

p-Phenylendiaminsulfonsäure und Tetrachlorpyrimidin;

p-Phenylendiaminsulfonsäure und-3,6-Dichlorpyridazin-4-carbonsäurechlorid.

Beispiel 5

281 g 4-Aminophenyl-ß-sulfatoäthyl-sulfon werden neutral in etwa 6000 ml Wasser gelöst. Die neutrale Lösung wird mit 70 g Natriumnitrit versetzt und dann bei 0 - 3° in 250 ml 10 n Salzsäure eingerührt. Ist die Diazotierung beendet, gibt man die Diazosuspension zu einer neutralen Lösung von 1466 g 3-/4-Sulfo-3{4-methoxy-6-[4-sulfo-3-(3-carboxy-5-hydroxy-1-pyrazolyl)-phenylamino/-s-triazinyl-amino}-phenyl/-aminosulfonyl-nickelphthalocyanin-3', 3'', 3'''-trisulfonsäure in etwa 9000 ml Wasser, der zuvor 100 g Bicarbonat zugesetzt worden waren. Die Kupplung ist in wenigen Minuten beendet.
Der entstandene grüne Phthalocyanin-azo-farbstoff kann durch Aussalzen oder Sprühtrocknen isoliert werden.
Die Herstellung der zur Kupplung benötigten Lösung des Phthalocyaninpyrazolons ist in Beispiel 1 beschrieben.

Zu Farbstoffen mit ähnlichen Eigenschaften gelangt man, wenn man anstelle des 4-Aminophenyl-ß-sulfatoäthyl-sulfons äquivalente Mengen der folgenden Amine verwendet:

3-Aminophenyl-ß-sulfatoäthyl-sulfon,

3-Amino-4-methoxyphenyl-ß-sulfatoäthyl-sulfon,

4-Amino-3-methoxyphenyl-ß-sulfatoäthyl-sulfon,

3-Amino-4-methylphenyl-ß-sulfatoäthyl-sulfon,

3-Amino-4-sulfophenyl-ß-sulfatoäthyl-sulfon,

4-Amino-3-bromphenyl-ß-sulfatoäthyl-sulfon,

4-Amino-3,5-dichlorphenyl-ß-sulfatoäthyl-sulfon,
3-Amino-4-carboxyphenyl-ß-sulfatoäthyl-sulfon,
4-Aminophenyl-ß-(N,N-dimethylamino)-äthyl-sulfon,
4-Aminophenyl-ß-(N,N-diäthylamino)-äthyl-sulfon,
4-Aminophenyl-ß-phosphatoäthylsulfon,
4-Aminophenyl-ß-thiosulfatoäthyl-sulfon,
4-Aminophenyl-vinyl-sulfon,
4-(4'-Aminobenzoyl)-amino-phenyl-β-sulfatoäthylsulfon
3-(4'-Aminobenzoyl)-amino-phenyl-β-sulfatoäthylsulfon
4-(3'-Aminobenzoyl)-amino-phenyl-β-sulfatoäthylsulfon
4-Aminonaphthyl-(1)-ß-sulfatoäthylsulfon,
5-Aminonaphthyl-(1)-ß-sulfatoäthylsulfon,
6-Aminonaphthyl-(1)-ß-sulfatoäthylsulfon,
6-Aminonapthhyl-(2)-ß-sulfatoäthylsulfon,
6-Amino-4-sulfonaphthyl-(2)-ß-sulfatoäthylsulfon,
8-Amino-naphthyl-(2)-ß-sulfatoäthylsulfon,
8-Amino-6-sulfo-naphthyl-(2)-ß-sulfatoäthylsulfon,

Beispiel 6

281 g 4-Aminophenyl-ß-sulfatoäthyl-sulfon werden neutral in etwa 6000 ml Wasser gelöst. Die Lösung läßt man nach Zugabe von 70 g Natriumnitrit in 250 ml 10 n Salzsäure einfließen und gibt die so erhaltene Diazosuspension anschließend, wie in Beispiel 5 beschrieben, zu einer Lösung des in Beispiel 6 beschriebenen, aus 535 g 3,3'-Bis-/(4-aminophenyl)-amino-sulfonyl/-nickelphthalocyanin-3", 3"'-disulfonsäure hergestellten Bispyrazolons. Die Kupplung ist in wenigen Minuten beendet. Der entstandene Farbstoff kann durch Sprühtrocknung isoliert werden.

Beispiel 7

268 g m-Phenylendiamin-4,6-disulfonsäure werden wie üblich mit 183 g Methoxy-dichlortriazin umgesetzt. Die Lösung des erhaltenen Kondensationsproduktes läßt man nach Zugabe von 70 g Natriumnitrit in 250 ml 10 n Salzsäure einfließen, und gibt die so erhaltene Diazosuspension anschließend, wie in Beispiel 1 beschrieben zu einer Lösung des wie weiter unten beschrieben aus 604 g 3,3'-Bis-/(4-aminophenyl)-

aminosulfonyl/-nickelphthalocyanin 3", 3"'-disulfonsäure hergestellten Bispyrazolons 3,3'-Bis-/4-{4-sulfanilino-6-|3,5-disulfo-4-(3-carboxy-5-hydroxy-1-pyrazolyl)-phenylamino/-s-triazinylamino}-phenyl/-aminosulfonyl-NiPc-3", 3"'-disulfonsäure. Anschließend wird der pH-Wert mit 4 n Sodalösung auf 7 - 7,2 gestellt und der entstandene grüne Farbstoff durch Aussalzen oder Sprühtrocknen isoliert.

Das als Kupplungskomponente eingesetzte Bispyrazolon wurde auf folgende Weise hergestellt:
535 g 3,3'-Bis-/(4-aminophenyl)-amino-sulfonyl)/-nickelphthalocyanin-3", 3"'-disulfosäure, hergestellt in üblicher Weise durch Kondensation von 0,5 Mol Nickelphthalocyanintetrasulfochlorid mit 1 Mol Acetyl-p-phenylendiamin und Verseifung des Kondensationsproduktes werden mit 3500 ml Wasser verrührt und durch Zugabe von 200 ml 10 n Natronlauge gelöst.
Zu dieser Lösung gibt man bei 35-45 °C 340 g des Kondensationsproduktes aus Cyanurchlorid und Sulfanilsäure, und hält mit etwa 100 ml 10 n Natronlauge den pH-Wert zwischen 6 und 7. Wenn keine freien Aminogruppen mehr nachweisbar sind, wird die neutrale Lösung mit einer neutralen Lösung von 275 g p-Phenylendiamin-2,6-disulfonsäure in etwa 3000 ml Wasser versetzt und auf etwa 75° erwärmt. Gleichzeitig hält man mit weiteren 100 ml 10 n Natronlauge den pH-Wert zwischen 6 und 7. Wenn der pH-Wert konstant bleibt, ist die Reaktion beendet und nicht umgesetzte p-Phenylendiamindisulfonsäure läßt sich in einem Chromatogramm nur noch spurenweise nachweisen. Das entstandene Amin entspricht der allgemeinen Formel V. Es wird durch Zugabe vonSteinsalz abgeschieden und durch Waschen mit 20%igem Salzwasser von eventuell nicht umgesetzter p-Phenylendiamindisulfonsäure befreit. Es wird dann erneut mit etwa 8000 ml Wasser neutral gelöst, mit 72 g Natriumnitrit versetzt und in eine Mischung aus 300 ml 10 n Salzsäure und 2000 g Eis bei 0 - 5° eingerührt. Nach kurzer Zeit wird ein eventueller Überschuß von Nitrit durch Zugabe von Aminosulfosäure zerstört. In die so erhaltene Diazosuspension werden 240 g Acetylbernsteinsäurediäthylester eingegossen. Anschließend wird der pH-Wert zunächst durch Einstreuen von ca. 130 g Soda auf 5,5 gestellt unddann mit ca. 84 g Natriumbicarbonat bei 5 bis 6 gehalten. Man rührt anschließend ca. 1 Stunde nach. Das Ende der Reaktion erkennt man daran, daß der pH konstant bleibt und daß beim Versetzen einer Probe mit einer Lösung von H-Säure in 2 n Soda keine Farbtonveränderung eintritt.

Die so erhaltene Lösung des Oxalessigsäuredimethylesterhydrazons wird mit 350 ml 10 n Lauge versetzt, wodurch der pH auf Werte von 12 bis 13 ansteigt. Man rührt einige Stunden, am besten über Nacht bei Raumtemperatur. Der Ringschluß zum entsprechenden 3-Carboxy-pyrazolon-5 ist dann abgeschlossen. Der pH-Wert wird mit etwas Salzsäure auf 8 zurückgestellt und die erhaltene Rohlösung direkt zur Kupplung eingesetzt.

<u>Beispiel 8</u>

230 g 2-Amino-4-acetylamino-benzolsulfonsäure werden neutral in etwa 3000 ml Wasser gelöst. Zu dieser Lösung gibt man 70 g Natriumnitrit und läßt sie dann bei 0 - 5$^{o}$ in eine Mischung aus 250 ml 10 n Salzsäure und ca. 1000 g Eis einfließen. Die so erhaltene Diazosuspension gibt man dann, wie in Beispiel 1 beschrieben, zu einer neutralen Lösung von 1466 g 3-[4-Sulfo-3{4-methoxy-6-[4-sulfo-3-(3-carboxy-5-hydroxy-1-pyrazolyl)-phenylamino]-s-triazinyl-(2)-amino}-phenyl]-aminosulfonyl-nickelphthalocyanin-3', 3", 3"'-trisulfonsäure in etwa 9000 ml Wasser, der zuvor 100 g Bicarbonat zugesetzt worden waren. Die Kupplung ist in wenigen Minuten beendet. Der entstandene grüne Phthalocyanin-azo-farbstoff wird anschließend mit ca. 300 ml 10 n Natronlauge versetzt und ca. 10 Stunden bei ca. 95$^{o}$C gerührt, bis die Verseifung der Acetylgruppe beendet ist. Der so erhaltene Farbstoff entspricht der allgemeinen Formel Ia. Die Lösung des Farbstoffs wird anschließend mit ca. 150 ml 10 n HCl versetzt und dann bei 0 - 5$^{o}$ zu einer Suspension von 190 g Cyanurchlorid in 750 ml Wasser, 750 g Eis und 400 ml Aceton bei pH 5 - 6 zulaufen lassen. Der so erhaltene Farbstoff ist identisch mit dem nach Beispiel 1 hergestellten Farbstoff. Ersetzt man die als Diazokomponente eingesetzte 2-Amino-4-acetylaminobenzolsulfonsäure durch 2-Amino-5-acetylamino-

benzolsulfonsäure oder durch 1-Amino-4-acetylamino-benzol-2,5-disulfonsäure und verfährt im übrigen wie oben beschrieben, so erhält man ebenfalls wertvolle, erfindungsgemäße Farbstoffe.

Ersetzt man das als Acylierungsmittel eingesetzte Cyanurchlorid durch eines der folgenden Acylierungsmittel, so erhält man ebenfalls wertvolle erfindungsgemäße Farbstoffe:

2-4'-Sulfophenylamino-4,6-dichlor-1,3,5-triazin

2-Methoxy-4,6-dichlor-1,3,5-triazin

Kondensationsprodukt aus 1 Mol Cyanurchlorid und 1 Mol 2-β-Amino-äthylamino-4-(2',5'-disulfophenylamino)-6-chlortriazin-1-3-5

β-Chlorpropionsäurechlorid

2,3-Dichlorchinoxalin-6-carbonsäurechlorid

3,6-Dichlorpyridazin-4-carbonsäurechlorid

2,4-Disulfo-6-chlor-1,3,5-triazin

Beispiel 9

932 g 3-(β-Aminoäthyl)-aminosulfonyl-nickel-phthalocyanin-3', 3", 3'''-trisulfonsäure, hergestellt in üblicher Weise durch Kondensation von Nickelphthalocyanintetrasulfochlorid mit 1-Amino-2-acetylaminoäthan und anschließender alkalischer Verseifung, werden in 7000 ml Wasser verrührt und durch Zugabe von 400 ml 10 n Natronlauge gelöst. Zu dieser Lösung gibt man bei 0 - 5°C 407 g des in üblicher Weise hergestellten Kondensationsproduktes aus Cyanurchlorid und Anilin-2,5-disulfonsäure und hält gleichzeitig mit etwa 100 ml 10 n Natronlauge den pH-Wert zwischen 8 und 10. Wenn kein Alkali mehr verbraucht wird, wird die neutrale Lösung mit einer neutralen Lösung von 195 g 1,3-Diamino-benzol-4-sulfonsäure in etwa 3000 ml Wasser versetzt und auf etwa 45°C erwärmt. Gleichzeitig hält man mit weiteren 100 ml 10 n Natronlauge den pH-Wert zwischen 6 und 7. Wenn der pH-Wert konstant bleibt, ist die Reaktion beendet und nicht umgesetzte 1,3-Diaminobenzol-4-disulfonsäure läßt sich in einem Chromatogramm nur noch spurenweise nachweisen. Das entstandene Amin entspricht der allgemeinen Formel X. Es wird, wie im Beispiel 1 beschrieben, durch Diazotieren,

Kuppeln auf Acetylbernsteinsäuredimethylester und nachfolgende Umlagerung in das entsprechend substituierte Pyrazolen überführt.

Zu dem so erhaltenen erfindungsgemäßen Pyrazolon gibt man dann, wie im Beispiel 1 beschrieben, das diazotierte Kondensationsprodukt aus 1,3 Phenylendiamin-4-sulfonsäure und Cyanurchlorid und kuppelt entsprechend den dort gemachten Angaben.

Ersetzt man die 1,3-Diaminobenzol-4-sulfonsäure bei der Kondensationsreaktion mit der 3-/ß-(2-Chlor-4-/4'-sulfophenyl7-amino)-triazinylaminoäthyl7-aminosulfonyl-Ni-Pc-3', 3", 3"'-trisulfonsäure durch eines der im folgenden genannten Amine, so erhält man ebenfalls wertvolle Phthalocyaninpyrazolone:

1,4-Phenylendiamin-2-sulfonsäure
1,3-Phenylendiamin-4,6-disulfonsäure
1,4-Phenylendiamin-2,5-disulfonsäure
1,4-Phenylendiamin-2,6-disulfonsäure
2,4-Diaminotoluol-6-sulfonsäure

Ersetzt man das diazotierte Kondensationsprodukt aus Cyanurchlorid und 1,3-Phenylendiamin-4-sulfonsäure durch die Diazoverbindung eines der folgenden Amine, so erhält man ebenfalls wertvolle, erfindungsgemäße Farbstoffe:

4-Aminophenyl-ß-sulfatoäthyl-sulfon
6-Amino-4-sulfonaphthyl-(2)-ß-sulfatoäthylsulfon
Kondensationsprodukt aus 1,3-Phenylendiamin-4,6-disulfonsäure und Cyanurchlorid (Molverhältnis 1 : 1)
Kondensationsprodukt aus 1,3-Phenylendiamin-4-sulfonsäure und 2,4-Dichlor-6-(4-sulfophenyl)-amino-1,3,5-triazin (Molverhältnis 1 : 1).

Patentansprüche

1. Wasserlösliche faserreaktive grüne Phthalocyanin - Azofarbstoffe der Formel I

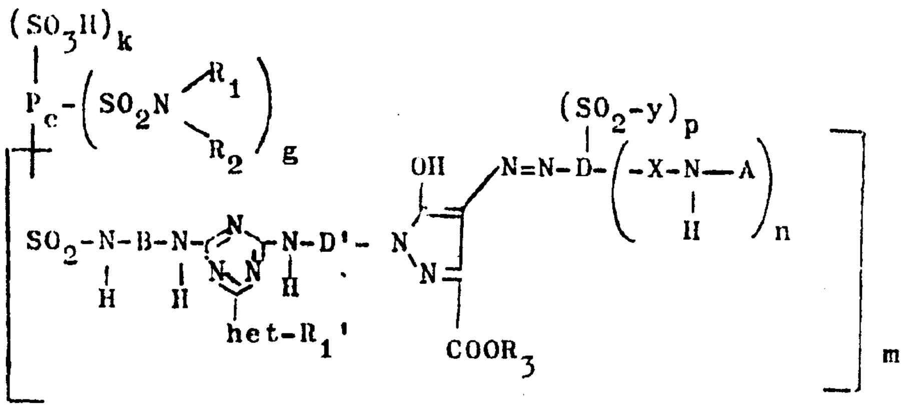

I

worin

Pc den Rest eines metallhaltigen oder metallfreien Phthalocyanins,

D und D' den Phenylen-, Naphthylen-, Diphenyl-, Stilben- oder Phenylcarbamoylphenylrest, wobei D und D' gleich oder verschieden und gegebenenfalls substituiert sein können,

B den Rest eines aliphatischen Kohlenwasserstoffs mit 2-6 C-Atomen, den Phenylen-, Naphthylen, Benzyl-, Diphenyl- oder Stilbenrest, die gegebenenfalls substituiert sein können,

A einen faserreaktiven Rest

y den Vinylrest oder einen Aethylrest, der ß-ständig eine abspaltbare Gruppe enthält,

$R_1$ und $R_1'$ Wasserstoff, gegebenenfalls substituiertes Alkyl mit 1 - 6 C-Atomen oder Phenyl, wobei der aromatische Kern gegebenenfalls weitere Substituenten tragen kann und wobei $R_1$ und $R_1'$ gleich oder verschieden sein können und $R_1'$ zusätzlich gegebenenfalls substituiertes Naphthyl,

$R_2$ Wasserstoff, gegebenenfalls substituiertes Alkyl mit 1-6 C-Atomen oder unsubstituiertes Alkyl mit 7 - 2o C-Atomen,

$R_3$ Wasserstoff oder gegebenenfalls substituiertes Alkyl mit 1 - 6 C-Atomen,

het O, N oder S
|
$R_1$

X eine direkte Bindung oder für den Fall, daß D für den Rest des Benzols oder Naphthalins steht, auch Methylen oder Aethylen

k 1,2, oder 3

g 0 oder 1

m 1, 2 oder 3

n 0 oder 1

p 0 oder 1

bedeutet und wobei die Summe von k, g und m = 3 oder 4 und die Summe von n und p = 1 ist und ihre Alkali-, Ammonium- oder Erdalkalisalze.

2. Wasserlösliche faserreaktive grüne Phthalocyanin - Azofarbstoffe gemäß Anspruch 1 dadurch gekennzeichnet, daß

Pc den Rest eines metallhaltigen Phthalocyanins,

D und D' den gegebenenfalls durch eine $-SO_3H$- oder -COOH-Gruppe substituierten Phenylen- oder Naphthylenrest, der pro Kern durch einen Substituenten der Gruppe Alkoxy mit 1 - 2 C-Atomen oder eine zusätzliche $-SO_3H$- oder -COOH-Gruppe, durch ein oder zwei gleiche oder verschiedene Halogenatome oder durch ein bis drei gleiche oder verschiedene Alkylreste mit 1 - 2 C-Atomen substituiert sein kann, den Disulfostilbenrest, den Disulfodiphenylest oder den Phenylcarbamoylphenylrest,

B den Rest eines gegebenenfalls substituierten aliphatischen Kohlenwasserstoffs mit 2 - 6 C-Atomen, den gegebenenfalls durch eine $-SO_3H$- oder -COOH-Gruppe substituierten Phenyl- oder Naphthylrest, der pro Kern durch einen Substituenten der Gruppe Alkoxy mit 1 - 2 C-Atomen oder eine zusätzliche $-SO_3H$- oder -COOH-Gruppe, durch ein oder zwei gleiche oder verschiedene Halogenatome oder durch ein bis drei gleiche oder verschiedene Alkylreste mit 1 - 2 C-Atomen substituiert sein kann, den Disulfostilbenrest oder den Disulfodiphenylrest

A den Rest einer faserreaktiven Acylierungskomponente

y den Vinylrest, den ß-Sulfatoäthylrest, den ß-Phosphatoäthylrest, den ß-Thiosulfatoäthylrest, den ß-Dimethylaminoäthyl- oder den ß-Diäthylaminoäthylrest,

$R_1$ und $R_1'$ Wasserstoff, Methyl, Carboxymethyl, Sulfomethyl, einen gegebenenfalls durch Cl, Br, OH, Alkoxy mit 1-2 C-Atomen, -COOH oder $-SO_3H$ substituierten Alkylrest mit 2-6 C-Atomen oder Phenyl, wobei der aromatische Kern durch Cl, Alkyl und/oder Alkoxy mit 1-2 C-Atomen, Alkanoylamino mit 1-2 C-Atomen, -COOH, $-CONH_2$, $-SO_2NH_2$ oder $-SO_3H$ substituiert sein kann, $R_1'$ zusätzlich Mono-, Di- oder Trisulfonaphthyl,

$R_2$ Wasserstoff, Methyl, Carboxymethyl, Sulfomethyl, einen gegebenenfalls durch Cl, Br, OH, Alkoxy mit 1-2 C-Atomen, -COOH oder $-SO_3H$ substituierten Alkylrest mit 2-6 C-Atomen oder einen unsubstituierten Alkylrest mit 6-20 C-Atomen,

$R_3$ Wasserstoff, Methyl, gegebenenfalls durch OH, Halogen oder Alkoxy mit 1-2 C-Atomen substituiertes Aethyl, Propyl, n- oder iso-Butyl, Pentyl oder Hexyl bedeutet.

3. Wasserlösliche faserreaktive grüne Phthalocyanin-Azofarbstoffe gemäß den Ansprüchen 1 und 2, dadurch gekennzeichnet, daß
Pc den Rest des Kobalt-, Kupfer- oder Nickelphthalocyanins bedeutet.

4. Verfahren zur Herstellung wasserlöslicher faserreaktiver grüner Phthalocyanin - Azofarbstoffe der Formel I

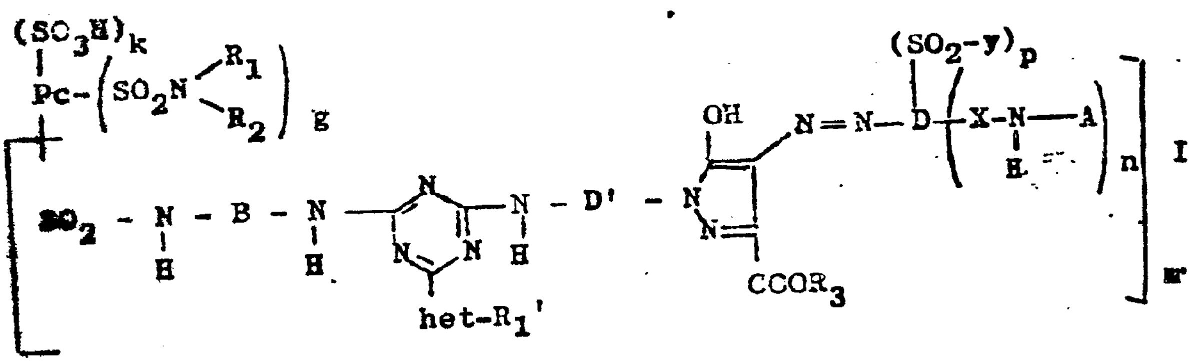

I

worin Pc, D, D', B, A, y, $R_1$, $R_1'$, $R_2$, $R_3$, het, X, k, g, m, n und p die oben genannten Bedeutungen haben, dadurch gekennzeichnet, daß man m-Mole eines Amins der Formel II

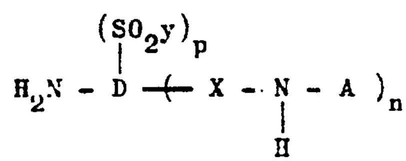

(II)

in der D, A, X, y, p und n die oben angegebene Bedeutung haben, diazotiert und auf ein Mol eines Pyrazolons der allgemeinen Formel III

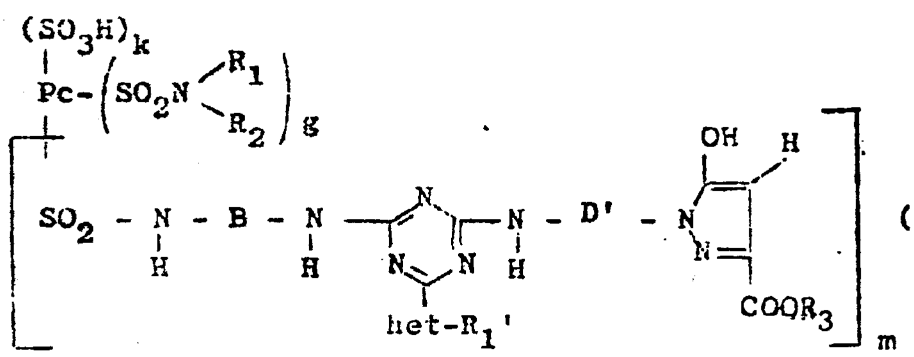

(III)

worin Pc, B, D', $R_1$, $R_1'$, $R_2$, $R_3$, k, g, m und het die oben angegebene Bedeutung haben, kuppelt.

5. Verfahren zur Herstellung wasserlöslicher faserreaktiver grüner Phthalocyanin - Azofarbstoffe der Formel I

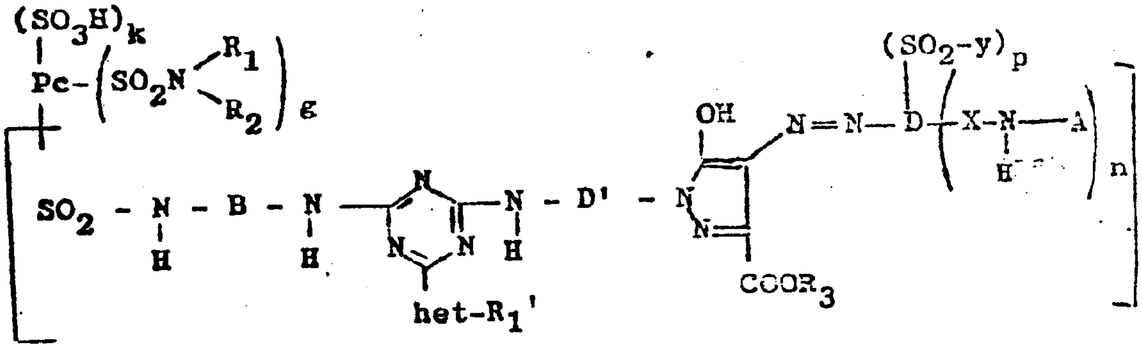

I

worin Pc, D, D', B, A, y, $R_1$, $R_1'$, $R_2$, $R_3$, het, X, k, g und m die oben genannten Bedeutungen haben und p = 0 und n = 1 ist, dadurch gekennzeichnet, daß man einen Farbstoff der allgemeinen Formel Ia

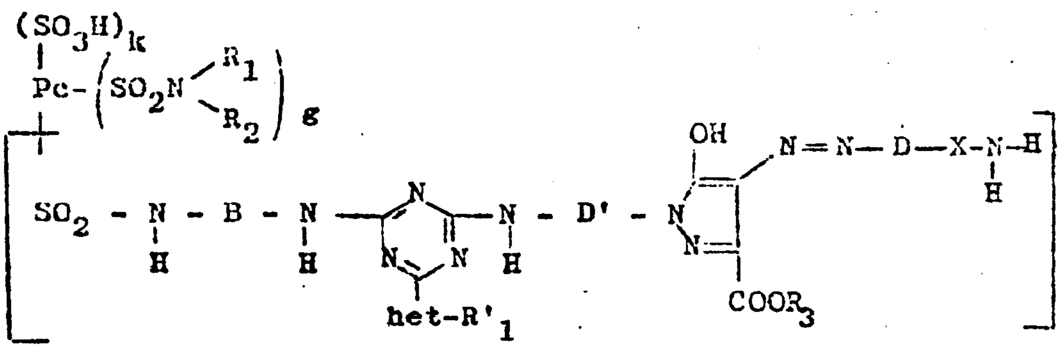

Ia

worin Pc, B, D', $R_1$, $R_1'$, $R_2$, $R_3$, het, D, X, k, g und m die oben angegebenen Bedeutungen haben, mit einem Chlorid der Formel IV

Cl - A (IV)

in der A die oben angegebene Bedeutung hat, acyliert.

6. Verwendung der wasserlöslichen faserreaktiven grünen Phthalocyanin - Azofarbstoffe nach Anspruch 1 der Formel I zum Färben und Bedrucken von Textilien bestehend aus oder enthaltend Fasern aus Wolle, Polyamid oder Zellulose.

7. Phthalocyaninpyrazolone der allgemeinen Formel III

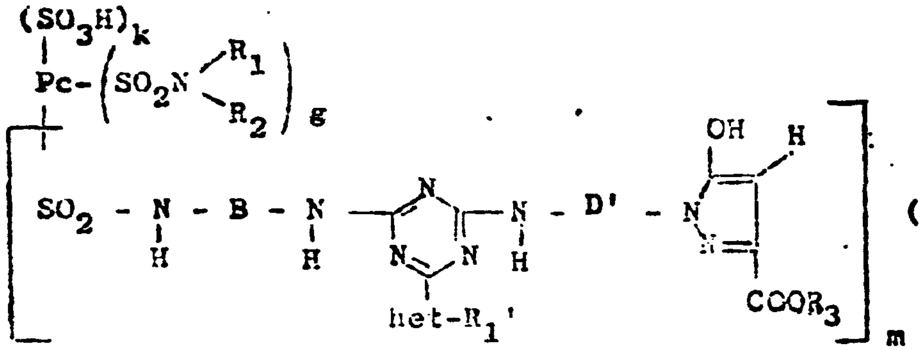
(III)

worin Pc, B, D', $R_1$, $R_1'$, $R_2$, $R_3$, k, g, m und het die oben angegebene Bedeutung haben.

8. Verfahren zur Herstellung von Phthalocyaninpyrazolonen der allgemeinen Formel III

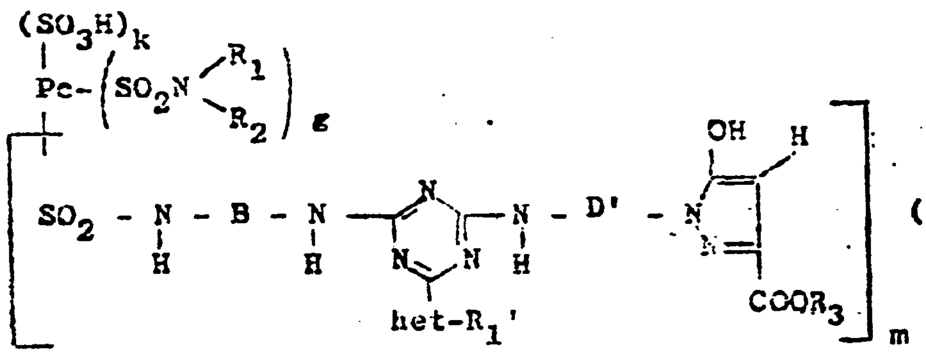
(III)

worin Pc, B, D', $R_1$, $R_1'$, $R_2$, $R_3$, k, g, m und het die oben angegebene Bedeutung haben, dadurch gekennzeichnet, daß man ein Amin der Formel V

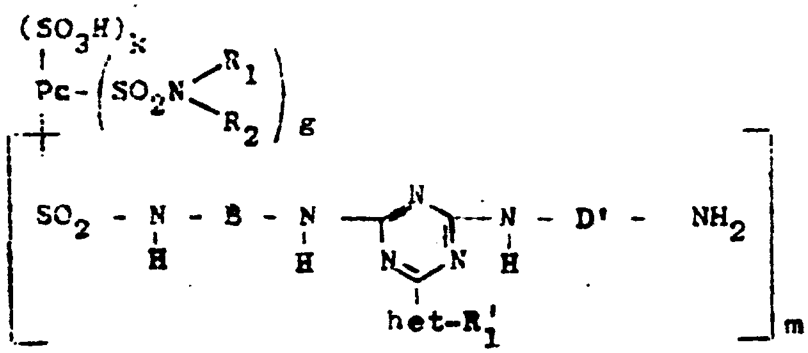
V

worin Pc, B, D', het, $R_1$, $R_1'$, $R_2$, k, g und m die oben genannten Bedeutungen haben, diazotiert und in wäßrigem Medium bei einem pH-Wert zwischen 3 und 8 mit einem Bernsteinsäurederivat der Formel VI

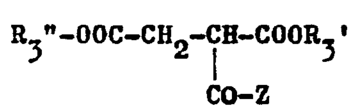
VI

worin $R_3'$ und $R_3''$ die oben für $R_3$ genannte Bedeutung außer der von Wasserstoff haben und Z Wasserstoff, Methyl, Aethyl, Phenyl oder Alkoxycarbonyl mit 1-2 C-Atomen bedeutet, kuppelt und das auf diese Weise entstandene Phthalocyaninhydrazon der Formel VII

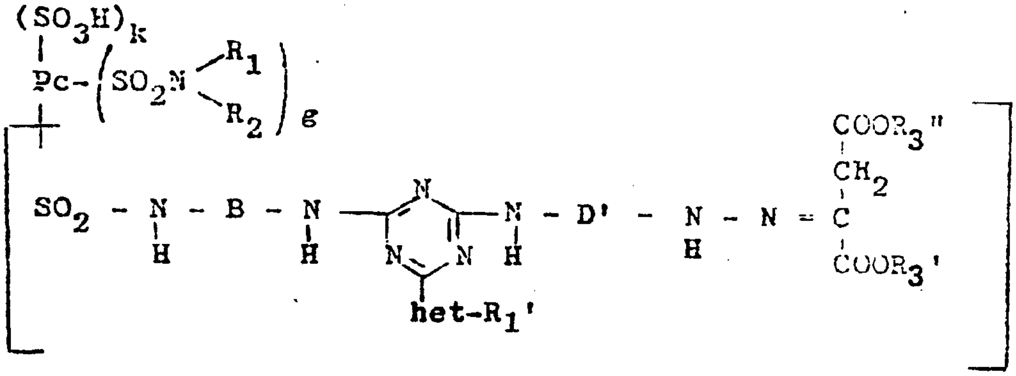 VII

in der Pc, B, D', het, $R_1$, $R_1'$, $R_2$, $R_3'$, $R_3''$, k, g und m die oben angegebene Bedeutung haben, in einem zweiten Reaktionsschritt durch alkalische Behandlung bei Temperaturen zwischen 0 und 100 °C unter Abspaltung des Alkohols der Formel $R_3''OH$ cyclisiert.

9. Verfahren zur Herstellung von Phthalocyaninpyrazolonen der allgemeinen Formel III

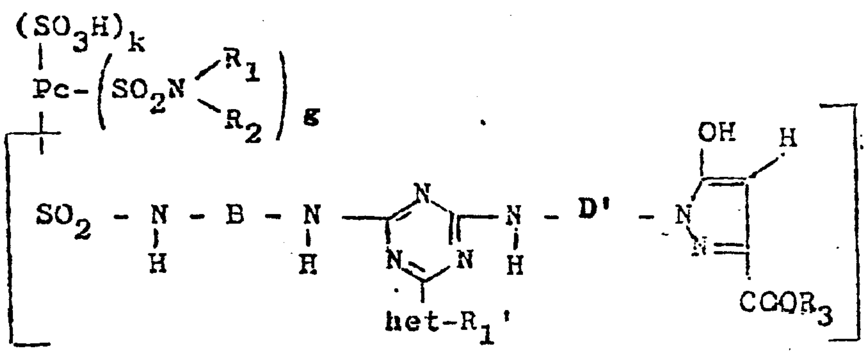 (III)

worin Pc, B, D', $R_1$, $R_1'$, $R_2$, $R_3$, k, g, m und het die oben angegebene Bedeutung haben, dadurch gekennzeichnet, daß man ein Amin der allgemeinen Formel Va

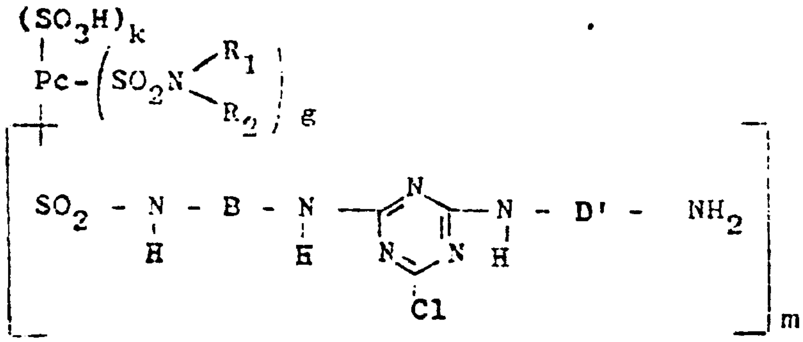

Va

worin Pc, B, D', $R_1$, $R_2$, k, g, und m die oben genannten Bedeutungen haben, diazotiert und in wäßrigem Medium bei einem pH-Wert zwischen 3 und 8 mit einem Bernsteinsäurederivat der oben angegebenen Formel VI kuppelt, das auf diese Weise entstandene Phthalocyaninhydrazon der Formel VIIa

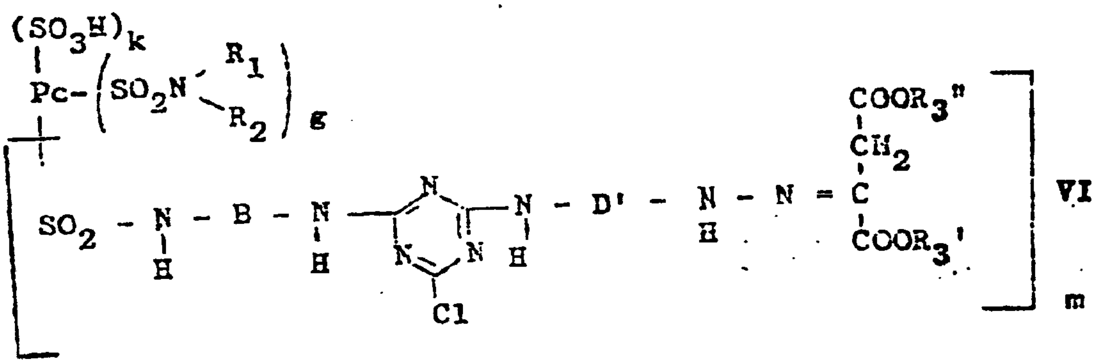

VIIa

in der Pc, B, D', $R_1$, $R_2$, $R_3'$, $R_3''$, k, g und m die oben angegebene Bedeutung haben, in einem zweiten Reaktionsschritt durch alkalische Behandlung bei Temperaturen zwischen 0 und 5o °C, unter Abspaltung des Alkohols der Formel $R_3''OH$ cyclisiert und anschließend das Chloratom am Triazinring des Cyclisierungsproduktes durch Umsetzung mit einer Verbindung der Formel

H-het-$R_1'$

in der het und $R_1'$ die oben angegebene Bedeutung haben, in an sich bekannter Weise durch den Rest -het-$R_1'$ ersetzt.

Europäisches Patentamt

# EUROPÄISCHER RECHERCHENBERICHT

Nummer der Anmeldung
EP 78 10 1121

| Kategorie | EINSCHLÄGIGE DOKUMENTE<br>Kennzeichnung des Dokuments mit Angabe, soweit erforderlich, der maßgeblichen Teile | betrifft Anspruch |
| --- | --- | --- |
| | BE - A - 686 430 (KUHLMANN)<br>* Seite 2; Seite 3, Absatz 1 und letzte Absatz bis Seite 4, Absatz 1; Seite 6, letzte Absatz; Seite 9, Absatz 3 *<br>-- | 1,4,5,6 |
| | FR - A - 1 575 489 (HOECHST)<br>* Seite 19, Beispiel 1; Seite 33, Beispiel 23; Seite 17, Zeile 41 - Seite 18, Zeile 4 *<br>-- | 1 |
| | CHEMICAL ABSTRACTS, vol. 82,no. 26, June 30, 1975, ref. 172492w<br>Ikeda, Takuo<br>KENMOCHI HIROTO: "Dycing textile materials", page 80<br>& JP 74 36 076 (SUMITOMO CHEMICAL CO LTD.)<br>---- | 1 |
| | ./. | |

KLASSIFIKATION DER ANMELDUNG (Int.Cl.²)

C 09 B 62/00
C 07 D 403/10
D 06 P 3/04
3/66//
C 09 B 47/08

RECHERCHIERTE SACHGEBIETE (Int. Cl.²)

C 09 B 62/00
62/02
62/04
62/10
62/08
62/20
62/24
62/26
62/44
62/46
62/50
62/52
62/70
62/74
62/76

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Gründen angeführtes Dokument
&: Mitglied der gleichen Patentfamilie, übereinstimmendes Dokument

[x] Der vorliegende Recherchenbericht wurde für alle Patentansprüche erstellt.

| Recherchenort | Abschlußdatum der Recherche | Prüfer |
| --- | --- | --- |
| Den Haag | 08-12-1978 | GINESTET |

Europäisches Patentamt

# EUROPÄISCHER RECHERCHENBERICHT

Nummer der Anmeldung

EP 78 10 1121

-2-

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | | | RECHERCHIERTE SACHGEBIETE (Int. Cl.²) |
| | | | C 09 B 47/08 |